(19) **Europäisches Patentamt / European Patent Office / Office européen des brevets**

(11) **EP 1 402 460 B1**

(12) # EUROPÄISCHE PATENTSCHRIFT

(45) Veröffentlichungstag und Bekanntmachung des Hinweises auf die Patenterteilung:
**12.09.2007 Patentblatt 2007/37**

(21) Anmeldenummer: **02727510.6**

(22) Anmeldetag: **28.03.2002**

(51) Int Cl.:
***G06K 9/00*** *(2006.01)*

(86) Internationale Anmeldenummer:
**PCT/EP2002/003580**

(87) Internationale Veröffentlichungsnummer:
**WO 2002/084576 (24.10.2002 Gazette 2002/43)**

(54) **AUTOMATISCHE IDENTIFIKATION UND/ODER VERIFIKATION LINIENHAFTER TEXTUREN WIE FINGERABDRÜCKE**

AUTOMATIC IDENTIFICATION AND/OR VERIFICATION OF LINE TEXTURES SUCH AS FINGERPRINTS

IDENTIFICATION ET/OU VERIFICATIONS AUTOMATIQUES DE TEXTURES A LIGNES TELLES QUE DES EMPREINTES DIGITALES

(84) Benannte Vertragsstaaten:
**AT BE CH CY DE DK ES FI FR GB GR IE IT LI LU MC NL PT SE TR**

(30) Priorität: **12.04.2001 DE 10118485**

(43) Veröffentlichungstag der Anmeldung:
**31.03.2004 Patentblatt 2004/14**

(73) Patentinhaber:
• **Idencom Germany GmbH**
**10587 Berlin (DE)**
• **Idencom AG**
**8820 Wädenswil (CH)**

(72) Erfinder: **ZENG, Qiu-Ping**
**CH-8820 Wädenswil (CH)**

(74) Vertreter: **Schmidt, Steffen J.**
**Wuesthoff & Wuesthoff,**
**Patent- und Rechtsanwälte,**
**Schweigerstrasse 2**
**81541 München (DE)**

(56) Entgegenhaltungen:
EP-A- 0 862 131          EP-A- 1 058 086
FR-A- 2 582 831          US-A- 5 991 430

• ASAI K ET AL: "AUTOMATIC FINGERPRINT IDENTIFICATION" IMAGING APPL. FOR AUTOMATED INDUSTRIAL INSPECTION & ASSEMBLY, 19-20 APRIL, WASHINGTON, BELLINGHAM, WA, US, Bd. SPEI 182, 19. April 1979 (1979-04-19), Seiten 49-56, XP000407377

• BALLAN M ET AL: "A fingerprint classification technique using directional images" SIGNALS, SYSTEMS & COMPUTERS, 1997. CONFERENCE RECORD OF THE THIRTY-FIRST ASILOMAR CONFERENCE ON PACIFIC GROVE, CA, USA 2-5 NOV. 1997, LOS ALAMITOS, CA, USA,IEEE COMPUT. SOC, US, 2. November 1997 (1997-11-02), Seiten 101-104, XP010280827 ISBN: 0-8186-8316-3

• WILLARD K: "AN APPROACH TO THE AUTOMATIC RETRIEVAL OF LATENT FINGERPRINTS" PROCEEDINGS CARNAHAN CONFERENCE ON CRIME COUNTERMEASURES, XX, XX, 7. Mai 1975 (1975-05-07), Seiten 45-51, XP000614256

• [INTERNET PUBLICATION OF STUDENT RESEARCH ON FINGERPRINT MATCHING, RICE UNIVERSITY, [Online] 2000, XP002205694 Houston, TX, USA Gefunden im Internet: <URL: http://www.owlnet.rice.edu/~elec301/P rojects00/roshankg/results.htm> [gefunden am 2002-07-11]

• RATHA N K ET AL: "A REAL-TIME MATCHING SYSTEM FOR LARGE FINGERPRINT DATABASES" IEEE TRANSACTIONS ON PATTERN ANALYSIS AND MACHINE INTELLIGENCE, IEEE INC. NEW YORK, US, Bd. 18, Nr. 8, 1. August 1996 (1996-08-01), Seiten 799-812, XP000632861 ISSN: 0162-8828

EP 1 402 460 B1

**Beschreibung**

Hintergrund der Erfindung

Die Erfindung betrifft Aspekte im Zusammenhang mit der Identifikation und/oder Verifikation von linienhaften Texturen, beispielsweise von Fingerabdrücken.

Der menschliche Fingerabdruck läßt sich dazu benutzen, um Personen zu identifizieren oder die Identität von Personen zu verifizieren. Bei der Identifikation von Personen wird ein bestimmter Fingerabdruck mit einer Vielzahl archivierter Fingerabdrücke verglichen. Außerdem ist es bekannt, zur Verifikation der Identität einer Person die Person zur Abgabe eines Fingerabdrucks aufzufordern und den abgegebenen Fingerabdruck mit einem bereits vorab abgespeicherten Fingerabdruck dieser Person zu vergleichen. Derartige Verifikationsverfahren dienen beispielsweise der Zutrittskontrolle, dem Schutz vor Mißbrauch im Sozialwesen, dem Schutz vor Datenmißbrauch usw.

Stand der Technik

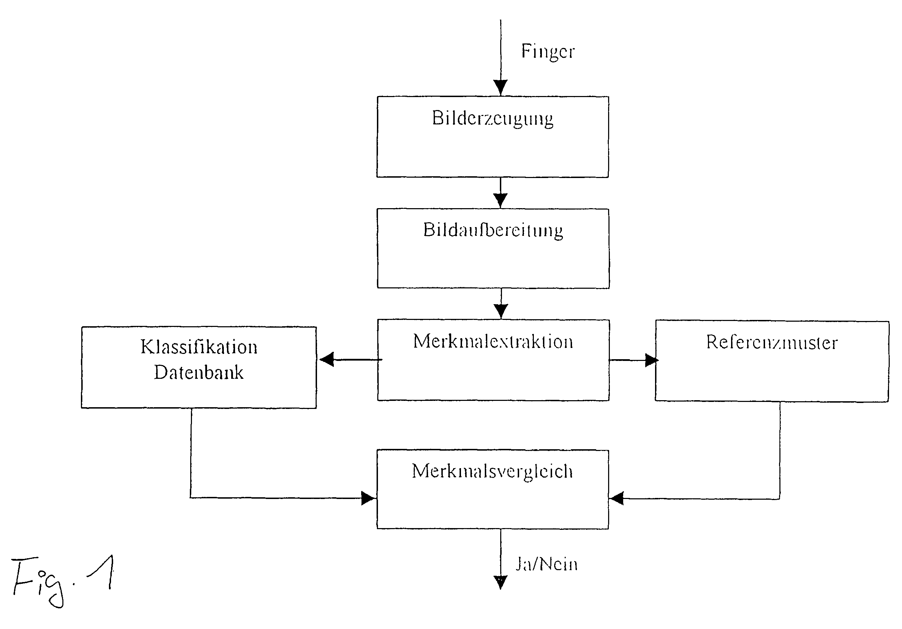

Sowohl für Identifikationszwecke als auch für Verifikationszwecke sind computergestützte Verfahren bekannt, welche in der Regel den in Fig. 1 skizzierten Ablauf besitzen. In einem ersten Schritt wird ein Bild des Fingerabdrucks erzeugt. Dieses Bild wird daraufhin aufbereitet und anschließend einer Merkmalsextraktion unterzogen. Bei Verifikationsanwendungen werden die extrahierten Merkmale mit den Merkmalen eines bestimmten Referenzmusters verglichen. Anschließend wird das Vergleichsergebnis ausgegeben. Bei Identifikationsanwendungen erfolgt basierend auf den extrahierten Merkmalen eine Grobklassifikation des Fingerabdrucks. Anschließend werden die extrahierten Merkmale mit den in einer entsprechenden Datenbankklasse abgespeicherten Merkmalen einer Mehrzahl von Referenzmustern verglichen. Abschließend wird das Ergebnis des Merkmalsvergleichs ausgegeben.

Die einzelnen Schritte des in Fig. 1 dargestellten Verfahrensablaufs und die dabei im Stand der Technik auftretenden Probleme werden nachfolgend näher erläutert. Bei der Bilderzeugung wird zunächst der Fingerabdruck mittels Tinte oder mittels eines Fingerabdrucksensors aufgenommen. Das aufgenommene Bild wird anschließend in ein Rasterbild gewandelt, um eine computergestützte, automatisierte Durchführung der Identifikation bzw. der Verifikation zu ermöglichen.

Aufgrund ungenügender Aufnahmebedingungen tritt häufig der Fall auf, daß das Rasterbild des Fingerabdrucks qualitative Schwächen besitzt. So kann beispielsweise die Papillarlinienstruktur schwer zu erkennen sein, weil die einzelnen Papillarlinien aufreißen, zerbrochen sind oder nicht voneinander getrennt werden können. Es ist daher in der Regel notwendig, das Rasterbild einer Bildaufbereitung zu unterziehen, um die Linienstruktur für die nachfolgende Merkmalsextraktion zu verbessern.

Im allgemeinen kann der für Identifikations- und Verifikationszwecke relevante Bereich des Rasterbilds eines Fingerabdrucks in drei Kategorien unterteilt werden. Die erste Kategorie entspricht gut definierten Bereichen, in denen die einzelnen Papillarlinien sauber voneinander getrennt sind und in einer kontinuierlichen Richtung verlaufen. Die zweite Kategorie entspricht verbesserbaren Bereichen, in denen die Papillarlinien nur teilweise durch Falten, Schmutz, Narben usw. gestört sind. In den verbesserbaren Bereichen ist die grundlegende Struktur der Papillarlinien noch sichtbar und benachbarte Bereiche beinhalten Informationen über die korrekte Linienstruktur in den verbesserbaren Bereichen. Die dritte Kategorie entspricht den nicht verbesserbaren Bereichen, in denen die Papillarlinien derart schlecht abgebildet sind, daß nur noch Rauschen und Störungen zu sehen sind, wobei auch die benachbarten Bereiche keine Anhaltspunkte über die echte Linienstruktur enthalten.

Das Ziel der Bildaufbereitung ist es, eine saubere Struktur der Papillarlinien in den verbesserbaren Bereichen zu erlangen und die nicht verbesserbaren Bereiche zu identifizieren und zu ignorieren. Die Bildaufbereitung darf auf keinen Fall zu einer Verfälschung der Papillarlinienstruktur führen, da dies die Individualität eines Fingerabdrucks verändern würde.

Bekannte Bildaufbereitungsverfahren führen eine Bildverbesserung im Binärbild oder im Grauwertbild durch. In der Regel ist eine Bildverbesserung im Grauwertbild zu bevorzugen, da im Rahmen der Binärisierung oftmals wichtige Details verloren gehen, welche dann nicht mehr zur Bildaufbereitung zur Verfügung stehen. Im Grauwertbild eines Fingerabdrucks besitzen die Papillarlinien lokal einen sinusförmigen Grauwertverlauf, welcher eine wohldefinierte Frequenz und Richtung besitzt. Viele Bildaufbereitungsverfahren benutzen diese Eigenschaft der Papillarlinien im Grauwertbild, um nach Durchführen einer FourierTransformation eine Bildverbesserung durch Filtern im Spektralbereich zu erzielen. Die Anwendung einer Fourier-Transformaton ist jedoch äußerst zeitintensiv. Der Bildaufbereitung im Ortsbereich ist daher der Vorzug zu geben, wenn eine schnelle Identifikation bzw. Verifikation angestrebt ist.

Nachfolgend wird ein im Ortsbereich durchgeführtes Bildaufbereitungsverfahren des Stands der Technik näher erläutert.

Aus Methre, Fingerprint Image Analysis for Automatic Identification Machine Vision and Applications, No. 2-3,pp. 124-139, 1993 ist ein Verfahren zur Aufbereitung des Grauwertbilds eines Fingerabdrucks bekannt. In einem ersten Schritt wird unter Verwendung des Grauwertbilds mittels eines statistischen Verfahrens ein Richtungsbild generiert, welches Informationen bezüglich der Pixelrichtungen enthält. Die Richtung eines Pixels ist definiert als die Richtung, entlang der die Grauwerte die geringste Änderung haben.

Das derart generierte Richtungsbild ist jedoch äußerst empfindlich gegen Rauschen und Störungen. Außerdem basiert die Richtungsgewinnung nur auf lokalen Informationen. Aus diesem Grund wird vorgeschlagen, Richtungsbilder für größere Parkettzellen von 16 x 16 Pixeln zu bilden und anschließend mit einer Maske von 3 x 3 Pixeln benachbarte Parkettzellen zu glätten. Dieses Verfahren scheitert allerdings, wenn relativ homogene Bereiche im Bild vorkommen, da es dann keine dominante Richtung gibt. Ein weiterer Nachteil dieses Verfahrens ist der äußerst hohe Rechenaufwand, welcher den Autor dazu veranlaßt hat, eine spezielle Hardware (MicroVAX 3400) zu benutzen.

Entlang der mit Hilfe des Richtungsbildes ermittelten Verlaufsrichtungen der Papillerlinien wird das Grauwertbild anschließend geglättet. Das geglättete Grauwertbild wird einer dynamischen Binärisierung unter Zuhilfenahme eines lokalen Schwellenwerts unterzogen.

Dabei wird um jedes Pixel der Mittelwert in einem Fenster der Größe 15 x 15 Pixel berechnet und als Schwellenwert benutzt.

Als letzter Schritt der Bildaufbereitung erfolgt eine Skelettierung des Binärbildes. Im Rahmen der Skelletierung werden die einzelnen Papillarlinien derart bearbeitet, daß zum Schluß lediglich noch eine Linie von der Breite eines Pixels verbleibt, welche in der Mitte der ursprünglichen Papillarlinie verläuft. Zur Skelettierung werden mehrfache morphologische Erosionen (20 - 30 Iterationen) durchgeführt. Dies ist extrem zeitaufwendig.

Parallel zur Erzeugung eines skelettierten Bildes wird auf der Grundlage des Richtungsbildes ein Gütebild erstellt, welches die Bereiche der dritten Kategorie (nicht verbesserbare Bereiche) markiert. Zur Erzeugung des Gütebildes werden die Unterschiede der Grauwertveränderungen innerhalb einer Parkettzelle statistisch bewertet. Sobald die Unterschiede unterhalb eines Schwellenwertes liegen, wird die entsprechende Parkettzelle als nicht verbesserbarer Bereich gekennzeichnet.

Als Ergebnis der Bildaufbereitung werden sowohl das skelettierte Bild als auch das Gütebild der anschließenden Merkmalsextraktion zur Verfügung gestellt. Nachteilig bei dem beschriebenen Verfahren zur Bildaufbereitung ist die Empfindlichkeit gegen Rauschen und Störungen sowie insbesondere der außerordentlich hohe Rechenaufwand.

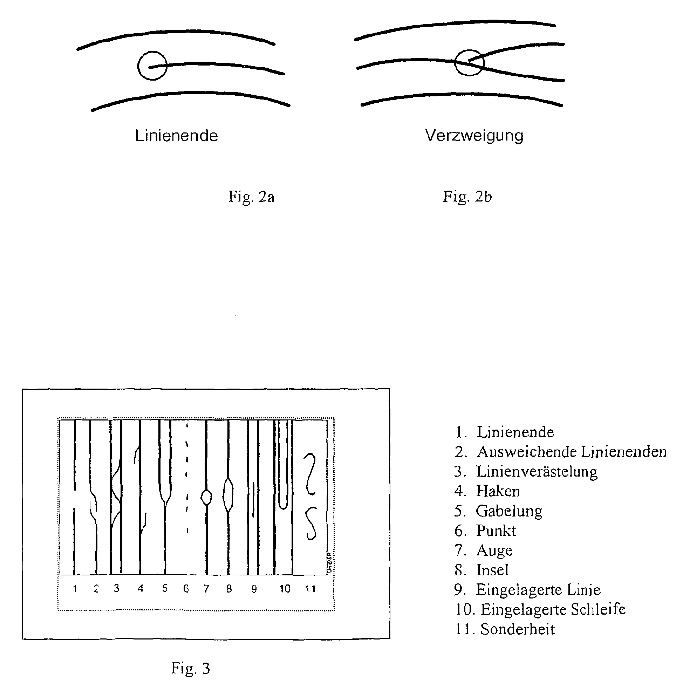

Wie Fig. 1 entnommen werden kann, wird im Anschluß an die Bildaufbereitung die Merkmalsextraktion durchgeführt. Linienhafte Texturen wie Fingerabdrücke sind durch ihre lokalen Merkmale und die topologischen Beziehungen zwischen solchen lokalen Merkmalen bestimmt. In der Daktyloskopie werden lokale Merkmale auch als Minuzien bezeichnet. Die wichtigsten Minuzien, nämlich Linienende und Linienverzweigung, sind in Fig. 2a und 2b dargestellt. Ein Linienende ist definiert als ein Punkt, an dem ein Linienverlauf endet. Eine Linienverzweigung ist definiert als ein Punkt, an dem sich eine Linie gabelt. Linienende und Linienverzweigung werden auch primitive Minuzien genannt. Aus den beiden primitiven Minuzien lassen sich die in Fig. 3 dargestellten, sogenannten "Kontextmerkmale" ableiten. In Fig. 3 sind von links nach rechts dargestellt Linienende (1), ausweichende Linienenden (2), Linienverästelung (3), Haken (4), Gabelung (5), Punkte (6), Auge (7), Insel (8), eingelagerte Linien (9) eingelagerte Schleife (10) und Sonderheit (11).

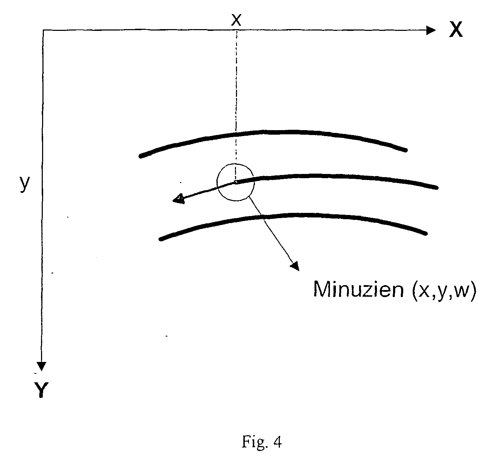

Die Merkmalsextraktion hat die Aufgabe, die Minuzien in einem Fingerabdruckbild zu identifizieren. Ein gut aufgenommener, abgerollter Fingerabdruck hat üblicherweise etwa 40 bis 130 Minuzien und ein latenter Fingerabdruck ungefähr 20 bis 70 Minuzien. Die im Rahmen der Merkmalsextraktion ermittelten Minuzien beschreiben einen Fingerabdruck vollständig. Üblicherweise werden von den ermittelten Minuzien die Ortskoordinaten x, y und der Winkel w gespeichert (Fig. 4). Mit dem Abspeichern der Minuzien geht eine starke Datenreduktion einher. Während ein Grauwert-Rasterbild typischerweise ungefähr 260 Kilobyte Speicherplatz benötigt, belegen die abgespeicherten Minuzien in der Regel weniger als ein Kilobyte. Die minuzienbasierte Identifikation von Fingerabdrücken gilt als eine der zuverlässigsten Identifikationsmethoden. So wird beispielsweise die Übereinstimmung einer bestimmten Anzahl von Minuzien gerichtlich als Indiz für die Urheberschaft eines Fingerabdrucks anerkannt.

Bei dem vorstehend beschriebenen Verfahren von Methre et al. werden die Minuzien eines Fingerabdrucks im skelettierten Binärbild ermittelt. Dabei wird eine Maske von 3 x 3 Pixel innerhalb des skelettierten Binärbilds verschoben. Ein Linienende ist dadurch charakterisiert, daß nur ein benachbartes Pixel innerhalb der Maske existiert. Eine Verzweigung hingegen weist mindestens drei benachbarte Pixel innerhalb der Maske auf.

Das Extrahieren der Minuzien im skelettierten Binärbild ist jedoch nicht unproblematisch. So werden im Rahmen der Skelettierung oftmals unechte Linienstrukturen hinzugefügt, welche fälschlicherweise als Minuzien identifiziert werden. Weiterhin macht das Vorhandensein von Rauschen, zerbrochenen oder zusammengeklebten Papillarlinien, Löchern oder anderen Störungen die Unterscheidung zwischen echten und unechten Minuzien äußerst schwierig. Da eine Papillarlinie im skelettierten Binärbild lediglich einen Pixel breit ist, existieren kaum noch effiziente Kriterien, um zwischen echten und unechten Minuzien zu unterscheiden. Nachteilig ist außerdem die bereits erwähnte Tatsache, daß die Skelettierung sehr rechenzeitintensiv ist.

In Mario et al., Direct Gray-Scale Minutae Detection in Fingerprints, Pattern Analysis and Machine Intelligence, No.1,pp.27-40, January 1997 wird vorgeschlagen, die Minuzien unmittelbar und ohne Bildaufbereitung aus dem Grauwertbild zu extrahieren. Dieses Verfahren verwendet jedoch komplizierte und schwierig zu implementierende Regeln und stellt damit kein übersichtliches Werkzeug zur Merkmalsextraktion zur Verfügung.

Im Rahmen der Merkmalsextraktion ist es außerdem erforderlich, alle Minuzien, welche irrtümlicherweise als solche identifiziert wurden, zu eliminieren. Dies geschieht in der Regel durch Überprüfen der topologischen Beziehungen zwischen den ermittelten Minuzien. Gemäß dem Verfahren von Methre et al. werden drei Fälle unechter Minuzien unterschieden. So können unechte Minuzien aus zusammengeklebten Papillarlinien bzw. aus zerbrochenen Papillarlinien und unechte Minuzien am Rand extrahiert werden.

Oftmals ist es jedoch schwierig, allein aus den Abständen und Winkeln zwischen den einzelnen Minuzien auf unechte Minuzien zu schließen. Es ist daher notwendig, die Erzeugung unechter Minuzien im Rahmen der Merkmalsextraktion soweit wie möglich zu vermeiden.

Wie Fig. 1 entnommen werden kann, schließt sich an die Merk- malsextraktion der Merkmalsvergleich an. Im Rahmen des Merkmalsvergleichs wird bestimmt, ob zwei vorliegende Fingerabdrücke von dem gleichen Finger stammen oder nicht. Es ist allgemeine anerkannt, daß wenn zwei Fingerabdrücke von dem gleichen Finger stammen, die jeweiligen Minuzien und die topologischen Zusammenhänge zwischen den Minuzien übereinstimmen. Da Minuzien Punktmerkmale sind (Fig. 4), kann der Vergleich von linienhaften Texturen, beispielsweise von Fingerabdrücken, auf einen Punktvergleich reduziert werden.

Aus verschiedenen Gründen gestaltet sich der Verleich zweier Minuziensätze jedoch schwierig. Aufgrund unterschiedlicher Aufnahmebedingungen tritt beispielsweise häufig der Fall auf, daß die Minuzien des ersten Minuziensatzes bezüglich der Minuzien des zweiten Minuziensatzes verschoben, rotiert oder unterschiedlich skelettiert sind. Unterschiedliche Aufnahmebedingungen können auch dazu führen, daß die zu ermittelnden Merkmale nicht in beiden Bildern gleichermaßen vorhanden sind. Ein Vergleich mit einer eins-zu-eins Relation zwischen den einzelnen Minuzien der beiden Minuziensätze ist folglich nicht möglich. Ein weiteres Problem des Minuzienvergleichs ist darauf zurückzuführen, daß aufgrund Rauschens und aufgrund der Merkmalsextraktion die ermittlten Positionen der Minuzien lokal verzerrt sein können. Eine exakte Übereinstimmung zwischen jeweils zwei Minuzien existiert in diesem Fall nicht mehr.

Aus dem Stand der Technik sind verschiedene Verfahren zur Durchführung des Merkmalsvergleichs bekannt. So wird beispielsweise in Ratha et al., A Real-Time Matching System For Large Fingerprint Databases, Pattern Analysis and Machine Intelligence, No.8 pp.799-813, August 1996 ein auf Hough-Transformationen basierendes Vergleichsverfahren beschrieben. Das Vergleichsverfahren umfaßt im wesentlichen drei Schritte.

In einem ersten Schritt erfolgt ein Schätzen der unbekannten Transformationsparameter, welche zur Abbildung der Minuzien eines ersten Minuziensatzes auf die Minuzien eines zweiten Minuziensatzes erforderlich sind. Dies geschieht mittels einer Hough-Transformation. Es wird dabei nach Transformationsparametern gesucht, welche zu möglichst vielen Überlappungen zwischen den beiden Minuziensätzen führen. Dabei wird für alle theoretisch möglichen Transformationsparameter ein Gütekriterium berechnet. Diejenige Transformation, welche die beste Güte aufweist, wird als korrekte Schätzung angenommen.

Nach dem Schätzen der Transformationsparameter werden in einem zweiten Schritt die Eingabeminuzien unter Verwendung der geschätzten Transformationsparameter transformiert und jede transformierte Minuzie der Reihe nach mit jeder Referenzminuzie des zweiten Minuziensatzes verglichen. Wenn der Abstand zwischen zwei miteinander verglichenen Minuzien innerhalb eines Toleranzbereichs liegt, werden diese beiden Minuzien als ein Minuzienpaar gekennzeichnet.

Als dritter und letzter Schritt wird ein Ähnlichkeitsmaß zwischen den beiden Minuziensätzen festgelegt. Das Ähnlichkeitsmaß entspricht der Anzahl der im zweiten Schritt aufgefundenen Minuzienpaare.

Nachteilig bei dem Vergleichsverfahren von Ratha et al. ist der hohe Rechenaufwand und die hohe falsche Zurückweisungsrate von über 10 % bei einer vergleichsweise niedrigen Akzeptanzschwelle von 10 korrespondierenden Minuzienpaaren. Eine falsche Rückweisung liegt dann vor, wenn zwei Fingerabdrücke des gleichen Fingers als unterschiedlich deklariert werden.

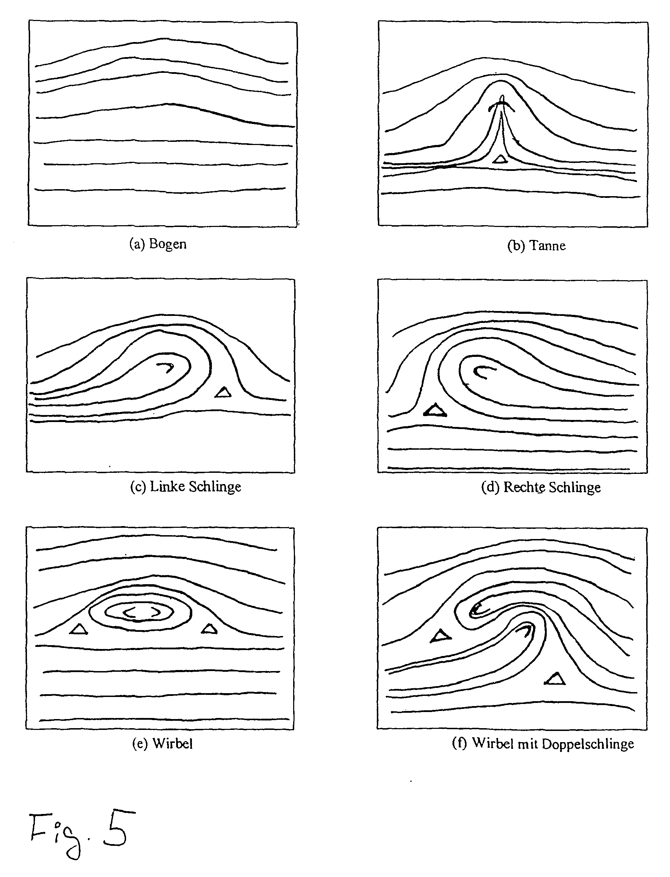

Wie im Zusammenhang mit Fig. 1 bereits erwähnt, läßt sich im Falle eines Fingerabdruck-Identifikationssystems der Merkmalsvergleich dadurch beschleunigen, daß alle in einer Datenbank abgelegten Fingerabdrücke nach bestimmten Kriterien klassifiziert werden. So lassen sich beispielsweise gemäß dem Henry-Klassifikationssystem Fingerabdrücke in verschiedene Musterklassen einordnen. Die Musterklassen sind durch das Vorhandensein bestimmter globaler Merkmale und die relative Lage der globalen Merkmale zueinander charakterisiert. Globale Merkmale werden als Kerne bezeichnet, wenn sie die Stelle eines Krümmungsmaximums der Papillarlinien bezeichnen. Globale Merkmale, welche einer dreieckigen Struktur im Verlauf der Papillarlinien entsprechen, werden Delten (griechisch "Delta") genannt. In Fig. 5 sind beispielhafte Verläufe von Papillarlinien mit den entsprechenden globalen Merkmalen dargestellt.

Das Henry-Klassifikationssystem umfaßt verschiedene Musterklassen. Die Musterklasse der Bögen besitzt keine Kerne oder Delten. Der Linienverlauf eines Bogens sieht derart aus, daß die Linien zu einer Seite einlaufen, in der Mitte anwachsen und zur anderen Seite auslaufen. Mittels der Steigung einer typischen Linienstruktur können Bögen noch feiner klassifiziert werden. So wird beispielsweise von einer Tanne gesprochen, wenn die Steigung groß genug ist. Gemäß dem Henry-Klassifizierungssystem wird von Schlingen gesprochen, wenn innerhalb einer Musterfläche ein Kern und ein Delta vorhanden sind. Als Wirbel werden gemäß dem Henry-Klassifikationssystem Strukturen bezeichnet, welche mindestens zwei Delten besitzen.

Die verschiedenen, im Stand der Technik bekannten automatischen Klassifikationsverfahren besitzen alle den Nachteil, daß trotz hoher Rechenzeit die falsche Klassifikationsrate äußerst hoch ist. So beträgt gemäß dem in Caro et al, Fingerprint Classification, Pattern Recognition, beschriebene Klassifikationsverfahren die Falschklassifikationsrate 13 %.

Aus der FR 2 582 831 A1 ist ein Verfahren zur Fingerabdrucksidentifizierung bekannt, bei dem ein Konturenbild aus einem Gradientenbild erzeugt wird und aus diesem Konturenbild Merkmale des Fingerabdrucks abgeleitet werden.

Der Erfindung zugrundeliegendes Problem

Der Erfindung liegt die Aufgabe zugrunde, die Nachteile der Verfahren und Vorrichtungen zum automatischen Auswerten und Bearbeiten von Rasterbildern linienhafter Texturen zu vermeiden und insbesondere Verfahren und Vorrichtungen anzugeben, welche schneller und zuverlässiger sind.

Erfindungsgemäße Lösung

Erfindungsgemäß wird ein Verfahren nach dem Anspruch 1 bzw. dem Anspruch 9 vorgeschlagen.

Weiterbildungen und Abwandlungen der Erfindung

Auf der Grundlage eines Konturbildes von linienhaften Texturen werden computergestützt die lokalen Merkmale der linienhaften Texturen ermittelt. Zu diesem Zweck werden zunächst Merkmalskriterien definiert und anschließend ein Konturenverlauf des gerasterten Konturbildes im Hinblick auf die Merkmalskriterien analysiert. Vorzugsweise wird das zur Ermittlung der lokalen Merkmale herangezogene Konturbild wie vorstehend beschrieben aus einem binärisierten, anisotrop geglätteten Grauwert-Rasterbidl erzeugt. Die Verwendung anderweitig erzeugter Konturbilder ist jedoch ebenfalls denkbar.

Zur Ermittlung der lokalen Merkmale wird die lokale Krümmung der in dem Konturbild enthaltenen Konturen analysiert. Die Analyse des Konturenverlaufs wird mittels eines, entlang der Kontur geführten Zweibeins erfolgen. Zweckmäßigerweise werden zumindest diejenigen Bereiche einer Kontur analysiert, deren Krümmung über einem bestimmten Schwellenwert liegt, da diese Bereiche potentiell Kandidaten für lokale Merkmale sind.

Vorzugsweise werden zumindest Linienenden und Verzweigungen als lokale Merkmale identifiziert. Im Bereich von Linienenden und Verzweigungen weisen die Konturen regelmäßig eine lokal besonders hohe Krümmung auf.

Zur Identifikation der lokalen Merkmale können verschiedene Merkmalskriterien herangezogen werden. Wird ein Zweibein zur Analyse des Konturenverlaufs herangezogen, kommen beispielsweise die folgenden Merkmalskriterien in Frage. So kann gemäß einem ersten Merkmalskriterium gefordert sein, daß der Winkel des Zweibeins, d.h. der Winkel zwischen den beiden Beinen des Zweibeins, unterhalb eines vorbestimmten Schwellenwertes oder innerhalb eines vorbestimmten Winkelsintervalls liegt. Ein zusätzliches oder alternatives, zweites Merkmalskriterium kann besagen, daß der Längenunterschied zwischen den beiden Beinen des Zweibeins kleiner als ein vorbestimmter, weiterer Schwellenwert ist. Gemäß einem zusätzlichen oder alternativen dritten Merkmalskriterium kann gefordert sein, daß der Längenunterschied zwischen einem der Beine des Zweibeins und der Länge der Kontur zwischen dem Anfangspunkt und dem Endpunkt dieses Beins auf der Kontur kleiner als ein vorbestimmter dritter Schwellenwert ist.

Um eine eindeutige Identifikation der ermittelten lokalen Merkmale zur ermöglichen, können von jedem ermittelten Merkmal die Ortskoordinaten und ein relativer Winkel bestimmt und abgespeichert werden. Zur Winkelbestimmung stehen verschiedene Verfahren zur Verfügung. So kann der Winkel beispielsweise mittels der Senkrechten zur Tangentenrichtung der Kontur an der Stelle des lokalen Merkmals bestimmt werden. Alternativ hierzu kann die Winkelermittlung auch durch Mittlung von Tangentenrichtungen in der Umgebung des lokalen Merkmals erfolgen.

Aus verschiedenen Gründen kann fälschlicherweise an einer Stelle ein lokales Merkmal ermittelt werden, an welcher die zugrunde liegende linienhafte Textur kein lokales Merkmal aufweist. Es ist daher erforderlich, die ermittelten lokalen Merkmale einer weiteren Analyse zu unterziehen, um unechte Merkmale erkennen und eliminieren zu können. Diese Analyse kann eine Beurteilung der Lage der ermittelten lokalen Merkmale und des Abstands zwischen den ermittelten lokalen Merkmalen umfassen.

Beispielsweise können alle lokalen Merkmale, deren gegenseitiger Abstand geringer als ein vorbestimmte vierter Schwellenwert ist, als unechte lokale Merkmale identifiziert werden. Auch können alle lokalen Merkmale, deren gegenseitiger Abstand größer als der vierte Schwellenwert, aber geringer als vorbestimmter fünfter Schwellenwert ist, zu einem einzigen lokalen Merkmal zusammengefaßt werden. Sollte um ein lokales Merkmal die Anzahl der benachbarten lokalen Merkmale geringer als ein vorbestimmter sechster Schwellenwert sein, so können das betreffende Merkmal und die benachbarten Merkmale als unechte lokale Merkmale identifiziert werden. Eine weitere Möglichkeit zur Beseitigung unechter lokaler Merkmale besteht in der Analyse des Gütebilds. So können alle lokalen Merkmale, die nicht innerhalb der Schnittmenge des Gütebilds und des Konturbilds liegen, als unechte lokale Merkmale identifiziert werden. Das Gütebild wird vorzugsweise, wie vorstehend beschrieben, auf der Grundlage des Richtungsbildes erstellt.

Nach der Analyse der Merkmale steht ein Satz lokaler Merkmale zur Verfügung, welcher mit großer Wahrscheinlichkeit nur noch echte lokale Merkmale umfaßt. Basierend auf diesem ersten Satz lokaler Merkmale kann ein rechnergestütztes Vergleichen mit mindestens einem zweiten Satz lokaler Merkmale erfolgen, um herauszufinden, ob die den Merkmalssätzen zugrunde liegenden linienhaften Texturen identisch sind oder nicht.

Das computergestützte Vergleichen der Sätze lokaler Merkmale umfaßt z.B. das automatische Bestimmen mindestens eines geschätzten Satzes Transformationsparameter für eine Transformation zwischen dem einen Satz lokaler Merkmale und dem anderen Satz lokaler Merkmale, das Durchführen der Transformation mittels des geschätzten Satzes Transformationsparameter zur Ermittlung der jeweils korrespondierenden lokalen Merkmale sowie das automatische Überprüfen des Satzes Transformationsparameter, wobei in Abhängigkeit von der Überprüfung eine iterative Korrektur des geschätzten Satzes Transformationsparameter erfolgt, indem die Transformation nochmals mittels des korrigierten Satzes Transformationsparameter zur erneuten Ermittlung der jeweils korrespondierenden lokalen Merkmale durchgeführt wird.

Vorzugsweise wird, wenn der geschätzte Satz Transformationsparameter bestimmte, im voraus festgelegte Anforderungen nicht erfüllt, der geschätzte Satz Transformationsparameter mindestens einmal korrigiert. Sobald ein korrigierter Satz Transformationsparameter die vorgegebenen Anforderungen erfüllt, kann von einer weiteren Korrektur abgesehen werden. Die iterative Korrektur kann auch dann abgebrochen werden, wenn nach einer vorgegebenen Anzahl von Iterationen der mehrmals korrigierte Satz Transformationsparameter den vorgegebenen Anforderungen noch immer nicht gerecht wird.

Bei der iterativen Korrektur des geschätzten Satzes Transformationsparameter können die jeweils aufgefundenen, korrespondierenden lokalen Merkmale als Ausgangspunkt für die Korrektur dienen. So kann die Korrektur beispielsweise derart vorgenommen werden, daß bei einer Transformation mittels des korrigierten Satzes Transformationsparameter die Korrespondenz der bereits ermittelten, korrespondierenden lokalen Merkmale aufrechterhalten wird.

Der Satz Transformationsparameter kann zumindest einen der Transformationsparameter, Skalierungsfaktor, Rotationswinkel und Translationsvektor umfassen. Zweckmäßigerweise wird zumindest einer dieser Transformationsparameter im Rahmen der iterativen Korrektur abgeändert. Die Korrektur des Translationsvektors kann mittels einer Varianzanalyse erfolgen. Eine mögliche Realisierung der iterativen Korrektur beinhaltet die Optimierung einer Kostenfunktion betreffend die jeweils vorgenommenen Korrekturen.

Es kann vorgesehen werden, daß die iterative Korrektur dann nicht durchgeführt wird, wenn die beiden zu überprüfenden Sätze lokaler Merkmale als übereinstimmend bewertet werden. Eine Be-wertung als übereinstimmend kann dann erfolgen, wenn ein erstes Gütekriterium erfüllt ist. Das erste Gütekriterium kann zumindest dann oder nur dann erfüllt sein, wenn die Anzahl der ermittelten, korrespondierenden lokalen Merkmale über einem vorbestimmten ersten Schwellenwert liegt.

Die iterative Korrektur kann zumindest dann oder nur dann durchgeführt werden, wenn die als korrespondierend ermittelten, lokalen Merkmale das erste Gütekriterium zwar nicht erfüllen, aber ein zweites Gütekriterium erfüllen, das geringer als das erste Gütekriterium ist. Eine mögliche Realisierung des zweiten Gütekriteriums ist die Forderung, daß die Anzahl der als korrespondierend ermittelten lokalen Merkmale unter dem ersten Schwellenwert, aber über einem vorbestimmten, zweiten Schwellenwert liegt.

Sollte weder das erste, noch das zweite Gütekriterium erfüllt sein, so werden die beiden Sätze lokaler Merkmale zweckmäßigerweise automatisch als nicht übereinstimmend bewertet. Von einer iterativen Korrektur des geschätzten Satzes Transformationsparameter kann dann abgesehen werden.

Gemäß einer bevorzugten Ausführungsform des computergestützten Vergleichens der Sätze lokaler Merkmale erfolgt im Rahmen des Bestimmens des mindestens eines geschätzten Satzes Transformationsparameter eine Vorauswahl im Hinblick auf die potentiell in Frage kommenden Sätze Transformationsparameter. Diese bevorzugte Ausführungsform ist grundsätzlich unabhängig von dem vorstehend beschriebenen automatischen Überprüfen des geschätzten Satzes Transformationsparameter und der nachfolgenden iterativen Korrektur. Die im Rahmen der Bestimmung des geschätzten Satzes Transformationsparameter durchgeführte Vorauswahl kann dahingehend getroffen werden, daß nur diejenigen Sätze Transformationsparameter berücksichtigt werden, welche in der Lage sind, ein beliebiges lokales Merkmal des ersten Satzes lokaler Merkmale auf ein beliebiges lokales Merkmal des zweiten Satzes lokaler Parameter, oder umgekehrt, abzubilden.

Gemäß einer weiteren, bevorzugten Ausführungsform des computergestützten Vergleichens zweier Sätze lokaler Merkmale werden die im Rahmen des Bestimmens des geschätzten Satzes Transformationsparameter berechneten Transformationsparameter quantisiert und die quantisierten Transformationsparameter in einem Transformationsparameterraum (z.B. dem Hough-Raum) angeordnet. Der Transformationsparameterraum kann einen Zähler für jeden quantisierten Transformationsparameterwert umfassen, wobei im Anschluß an das Berechnen und Quantisieren eines Transformationsparameterwertes der entsprechende Zähler automatisch erhöht wird. Der zum Zweck der Ermittlung der korrespondierenden lokalen Merkmale erforderliche geschätzte Satz Transformationsparameter kann derart bestimmt werden, daß er diejenigen Transformationsparameterwerte mit den höchsten Zählerständen umfaßt. Andere Auswahlkriterien sind gleichfalls denkbar. Das vorstehend erläuterte Quantisieren der Transformationsparameter und das Anordnen der quantisierten Transformationsparameter in einem Transformationsparameterraum kann grundsätzlich unabhängig von dem vorstehend erläuterten automatischen Überprüfen des geschätzten Satzes Transformationsparameter und dessen iterativer Korrektur durchgeführt werden.

Zur Ermittlung der korrespondierenden lokalen Merkmale zweier oder mehrerer Sätze lokaler Merkmale kann entweder nur ein einziger geschätzter Satz Transformationsparameter oder eine Mehrzahl geschätzter Sätze Transformationsparameter herangezogen werden. So kann beispielsweise nur derjenige geschätzte Satz Transformationsparameter herangezogen werden, welcher ein viertes Gütekriterium am besten erfüllt. Dieses vierte Gütekriterium kann beispielsweise der Stand eines geeigneten Zählers in dem vorstehend beschriebenen Transformationsparameter sein.

Andererseits kann für einen einzigen ersten Satz lokaler Merkmale und einen einzigen zweiten Satz lokaler Merkmale auch eine Mehrzahl geschätzter Sätze Transformationsparameter bestimmt und jeweils zur Ermittlung der korrespondierenden lokalen Merkmale herangezogen werden. So ist es möglich, alle diejenigen berechneten Sätze Transformationsparameter als geschätzte Sätze zu identifizieren, welche ein fünfte Gütekriterium erfüllen. Das fünfte Gütekriterium kann beispielsweise besagen, daß der entsprechende Zähler eines quantisierten Transformatonsparameterwerts innerhalb des vorstehend beschriebenen Transformationsparameterraums einen vorbestimmten Schwellenwert übersteigt.

Sollte sich während des Bestimmens eines geschätzten Satzes Transformationsparameter kein Satz Transformationsparameter finden lassen, welcher das vierte und/oder das fünfte Gütekriterium erfüllt, kann der Vergleichsvorgang bereits in diesem frühen Stadium abgebrochen werden. Die beiden Sätze lokaler Merkmale werden dann automatisch als nicht übereinstimmend bewertet, ohne daß eine Ermittlung der korrespondierenden lokalen Merkmale erforderlich wäre.

Es sind verschiedene Kriterien denkbar, um ein lokales Merkmal des ersten Satzes lokaler Merkmale und ein lokales Merkmal des zweiten Satzes lokaler Merkmale als korrespondierend zu identifizieren. Zweckmäßigerweise geschieht dies unter Berücksichtigung des Abstandes zwischen einem transformierten lokalen Merkmal des einen Merkmalssatzes und einem nichttransformierten lokalen Merkmal des anderen Merkmalssatzes. Zu diesem Zweck kann ein sechstes Gütekriterium beispielsweise in Form eines Maximalabstands definiert werden.

Die soeben erläuterten Verfahren zur Auswertung und/oder Bearbeitung von Grauwert-Rasterbildern linienhafter Texturen, zur Ermittlung der lokalen Merkmale linienhafter Texturen sowie zum Vergleichen der lokalen Merkmale linienhafter Texturen finden vorzugsweise im Rahmen eines Fingerabdruck-Identifikationsverfahrens Verwendung. Ein Verfahren zur biometrischen Identifikation und/oder Verifikation von Personen kann den Schritt des Bereitstellens eines Rasterbildes des Fingerabdrucks einer Person sowie einen oder mehrere der vorstehend erläuterten Verfahrensschritte umfassen. Die einzelnen Verfahrensschritte lassen sich vorteilhafterweise auf einem Computersystem durchführen, welches als biometrisches Identifikations- und/oder Verifikationseinrichtung ausgestaltet sein kann. Das Computersystem kann ein digitales Speichermedium mit elektronisch auslesbaren Steuersignalen umfassen, die so mit dem Computersystem zusammenwirken, das die entsprechenden Verfahren ausgeführt werden. Zumindest einige Aspekte dieser Verfahren können als Programmcode auf einem maschinenlesbaren Träger abgelegt werden.

Kurzbeschreibung der Zeichnung

Weitere Einzelheiten und vorteilhafte Ausgestaltungen der Erfindung werden nachfolgend unter Bezugnahme auf bevorzugte Ausführungsbeispiele und die Figuren näher erläutert. Es zeigt:

Fig. 1 die Arbeitsweise einer Identifikations-/Verifikationsvorrichtung;
Fig. 2a, 2b zwei primitive Minuzien;
Fig. 3 aus den primitiven Minuzien gemäß Figuren 2a und 2b zusammengesetzte Merkmalsformen;
Fig. 4 Ortskoordinaten und Winkel einer primitiven Minuzie;
Fig. 5 globale Merkmale gemäß dem Henry-Klassifikationssystem;
Fig. 6 eine Fingerabdruck-Identifikationsvorrichtung;
Fig. 7 eine Fingerabdruck-Verifikationsvorrichtung;
Fig. 8 die Off-line Phase und die On-line Phase der Verifikationsvorrichtung gemäß Fig. 7;
Fig. 9 den Aufbau eines Fingerabdrucksensors;
Fig. 10 den schematischen Ablauf des erfindungsgemäßen Bildaufbereitungsverfahrens;
Fig. 11 die im Rahmen des Bildaufbereitungsverfahrens angefertigten Darstellungen eines Fingerabdrucks;
Fig. 12 die Ermittlung des Papillarlinienabstands;
Fig. 13 eine beispielhafte Darstellung einer Konturenkodestruktur;
Fig. 14a, 14b zwei beispielhafte Konturbilder;
Fig. 15a, 15b ein Binärbild eines Fingerabdrucks und das daraus abgeleitete, gestörte Konturbild;

Fig. 16 die Erzeugung der Tangentenrichtung mittels eines Zweibeins;

Fig. 17 die Ermittlung des Winkels β eines Zweibeins;

Fig. 18a, 18b ein reguläres sowie ein irreguläres Zweibein;

Fig. 19 die acht Hauptrichtungen zur Bestimmung des Richtungskodes;

Fig. 20 die Anwendung eines richtungsabhängigen, eindeminsionalen Gauß-Filters und die Gewichtungen der Filter-Masken;

Fig. 21 die Rechenzeiten für einzelne Arbeitsschritte des erfindungsgemäßen Bildaufbereitungsverfahrens;

Fig. 22a, 22b die Bestimmung des Winkels einer Minuzie;

Fig. 23 ein Ablaufdiagramm des erfindungsgemäßen Minuzienvergleichsverfahrens;

Fig. 24 die Transformation zur Abbildung eines Eingabemusters auf ein Referenzmuster;

Fig. 25 die Korrektur einer Winkeldifferenz im Hough-Raum;

Fig. 26 eine mathematische Formulierung der Phase 1 des Minuzienvergleichs;

Fig. 27 den Minuzienvergleich basierend auf einem Toleranzbereich;

Fig. 28 die Überprüfung korrespondierender Minuzienpaare;

Fig. 29 Referenzminuzien und transformierte Eingabeminuzien vor der iterativen Korrektur der Transformationsparameter;

Fig. 30 eine mathematische Formulierung der Varianzanalyse zur Korrektur der Translationparameter;

Fig. 31 den schematischen Ablauf des erfindungsgemäßen Klassifikationsverfahrens;

Fig. 32 Die Ermittlung globaler Merkmale anhand des Pointcare-Index

Beschreibung derzeit bevorzugter Ausführungsformen

Obwohl sich das erfindungsgemäße Verfahren allgemein zum Analysieren, Aufbereiten und Vergleichen von Rasterbildern linienhafter Texturen verwenden läßt, betreffen die nachfolgenden Ausführungsbeispiele die bevorzugte Verwendung des Verfahrens im Zusammenhang mit der Identifikation und/oder Verifikation von Personen auf der Grundlage von Fingerabdrücken. Aus diesem Grund werden im folgenden die lokalen Merkmale als Minuzien bezeichnet.

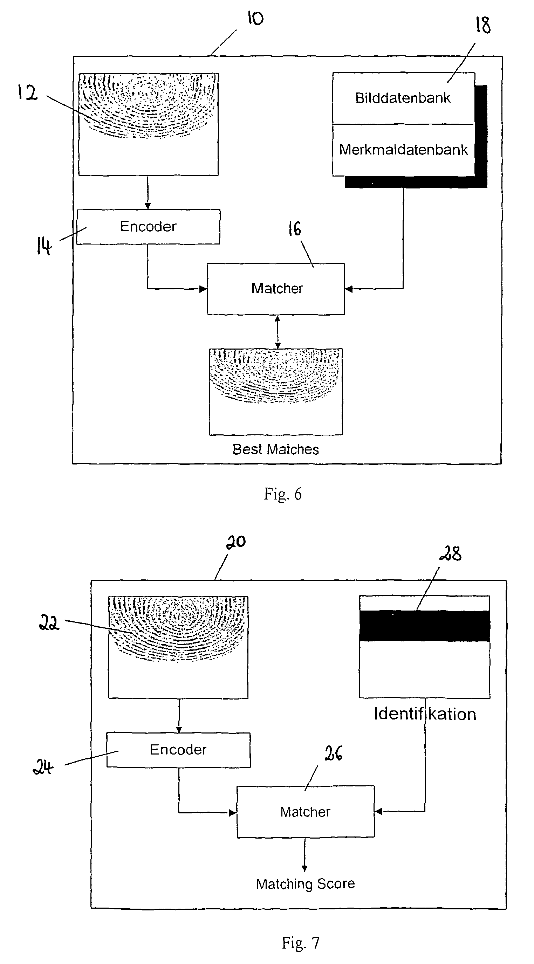

In Fig. 6 ist eine computergestützte Identifikationsvorrichtung abgebildet und Fig. 7 zeigt eine computergestützte Verifikationsvorrichtung 20.

Eine Codiereinheit 14 der Identifikationsvorrichtung 10 empfängt ein Grauwert-Rasterbild 12 eines Fingerabdrucks und führt eine Bildaufbereitung sowie eine Minuzienextraktion durch. Die extrahierten Minuzien werden an eine Vergleichseinheit 16 weitergegeben. Die Vergleichseinheit 16 vergleicht den von der Codiereinheit 14 empfangenen Minuziensatz mit einer Vielzahl von Minuziensätzen, welche in einer Datenbank 18 abgespeichert sind. Anschließend gibt die Vergleichseinheit 16 diejenigen Minuziensätze oder personenbezogene Informationen derjenigen Minuziensätze 18 aus, welche mehr als eine bestimmte Anzahl oder am meisten korrespondierende Minuzien aufweisen.

Bei der Verifikationsvorrichtung 20 gemäß Fig. 7 dient ebenfalls ein Grauwertbild 22 als Eingangssignal für eine Codiereinheit 24. Die Codiereinheit 24 führt eine Bildaufbereitung sowie eine Minuzienextraktion durch und gibt die extrahierten Minuzien an eine Vergleichseinheit 26 weiter. Die Vergleichseinheit 26 empfängt einen weiteren, vorab abgespeicherten Minuziensatz. Dieser Minuziensatz kann beispielsweise auf einer Magnetstreifenkarte 28, einer Chipkarte oder in einer Datenbank abgespeichert sein. Innerhalb der Vergleichseinheit 26 wird der von der Codiereinheit 24 zur Verfügung gestellte Minuziensatz mit dem vorab abgespeicherten Minuziensatz verglichen und die Anzahl der übereinstimmenden Minuzien ausgegeben. Je nach Anzahl der übereinstimmenden Minuzien gilt die Identität des Fingerabdrucks des Grauwert-Rasterbildes 22 als verfiziert oder nicht.

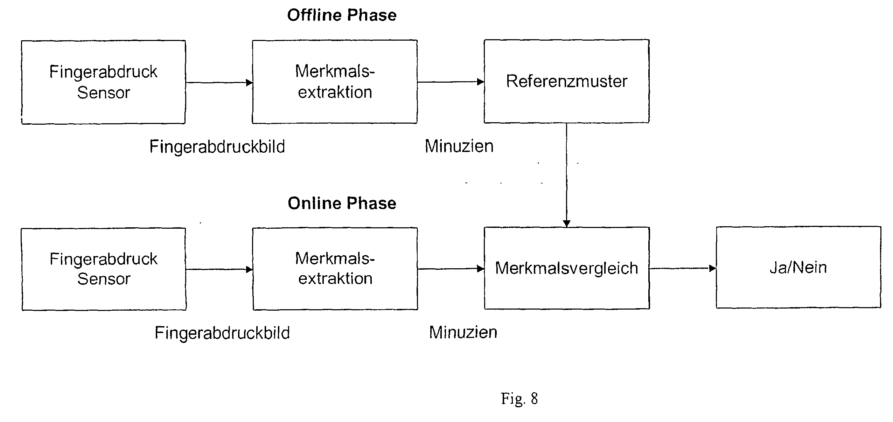

Bei der Verifikationsvorrichtung 20 gemäß Fig. 7 kann demzufolge zwischen einer Off-line Phase und einer On-line Phase unterschieden werden. Diese Unterscheidung ist in Fig. 8 dargestellt. In der Off-line Phase werden mehrere Fingerabdruckaufnahmen durchgeführt, die entsprechenden Minuzien extrahiert und danach als Referenzmuster in einem Datensatz für spätere Merkmalsvergleiche gespeichert. In der On-line Phase wird eine Aufnahme des Fingers einer beispielsweise Zutritt verlangenden Person erstellt, die Minuzien des aufgenommenen Fingerabdrucks extrahiert und mit dem abgespeicherten Referenzmuster verglichen.

Nachfolgend werden die einzelnen Arbeitsschritte der in den Fig. 6 und 7 dargestellten Vorrichtungen näher erläutert. Der grobe Ablauf wurde bereits unter Bezugnahme auf Fig. 1 geschildert.

## 1. Bilderzeugung

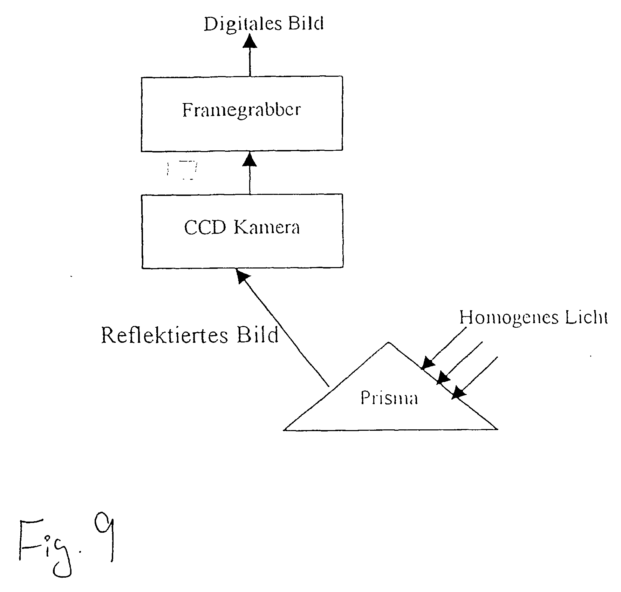

Diese Stufe dient der Wandlung einer Bildvorlage in ein physikalisches Bild und der Digitalisierung und Quantisierung dieses Bildes zur Erzeugung eines Rasterbildes, z.B. in Gestalt einer Matrix von 512×512 Pixeln mit 8-Bit Lichtintensitätswerten. Es gibt zwei Arten von Aufnahmemethoden, mit Tinte oder mit einem Fingerabdrucksensor. Bei Tintenaufnahmen wird der mit Tinte angefärbte Finger auf einen Papier abgerollt. Der so entstandene Fingerabdruck kann durch ein Scanner oder eine Videokamera digitalisiert werden. Dieses Vorgehen wurde in der Kriminalitätsbekämpfung schon relativ früh eingeführt. Die Digitalisierung eines Fingerabdruckes durch einen speziellen Fingerabdrucksensor dagegen gibt es erst seit jüngerer Zeit. Im Vergleich zur Tintenaufnahme ist der Fingerabdrucksensor benutzerfreundlicher. Bei der Sensoraufnahme wird das Bild durch Fingerauflegen auf ein Prisma unter Ausnutzung des Effekts der gestörten Totalreflexion gewonnen (Fig. 9). Dabei kann mittels z.B. einer Führungsvorrichtung die Drehung des Fingers gegenüber der Auflage auf ±40 Grad eingeschränkt werden, um damit die Merkmalsvergleichszeit zu verkürzen.

## 2. Bildaufbereitung

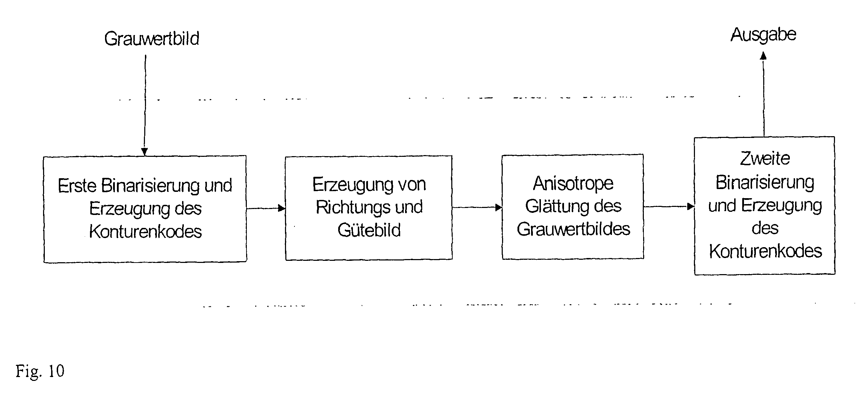

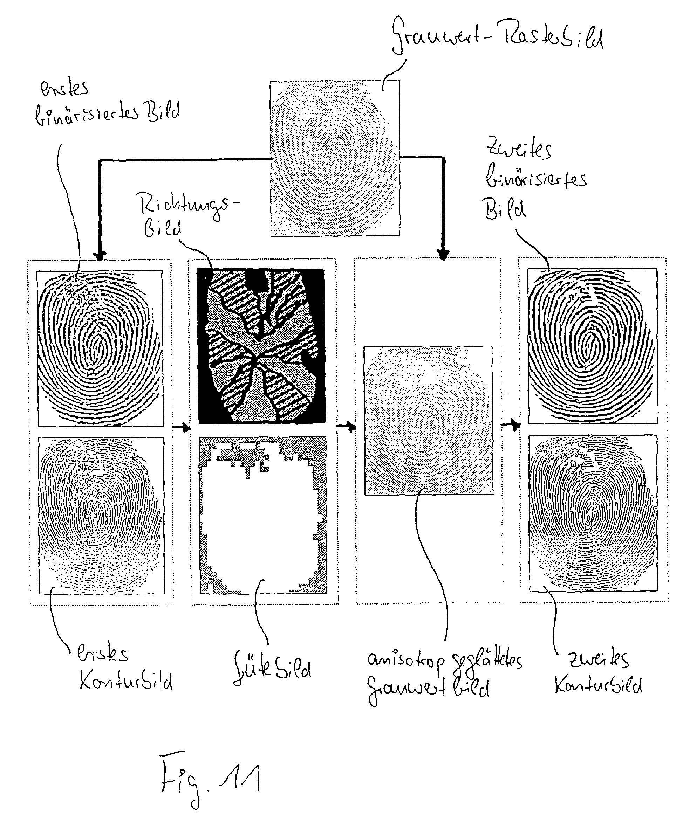

In diesem Abschnitt wird das implementierte Verfahren zur Bildaufbereitung erläutert. Besonders ausführlich wird die Erzeugung des Richtungsbildes dargestellt, denn durch ein zuverlässiges Richtungsbild ist es erst möglich, das Grauwert-Rasterbild gezielt zu verbessern und keine unechten Linienstrukturen hinzuzufügen. Ein Nebenprodukt der Richtungsbildberechnung ist die Ableitung eines Gütebildes. Der schematische Verfahrensablauf der Bildaufbereitung ist in den Figuren 10 und 11 schematisch dargestellt.

In einem ersten Schritt wird das Grauwertbild binärisiert. Außerdem werden die Konturen verfolgt und als Konturenkode abgespeichert. In einem zweiten Schritt werden die Tagentenrichtungen der Konturen anhand des Konturenkodes bestimmt und bewertet. Die Konturenrichtungen werden dann zusammengeschlossen und in kontinuierliche Pixelrichtungen umgewandelt. Das Gütebild wird durch Auswerten der Richtungsverteilung in Parkettzellen gewonnen. In einem dritten Schritt werden die Linien in ihrer Verlaufsrichtung mittels eines Gauß-Filters geglättet. Dadurch werden zerbrochene Linien sowie Rauschen und verschmierte Bereiche verbessert. In einem vierten Schritt wird das anisotrop geglättete Bild nochmals binärisiert und die Konturen des binärisierten Bildes werden erneut verfolgt. Die gespeicherten Konturinformation werden für die anschließende Minuzienextraktion verwendet.

### 2.1. Erste Binärisierung

Im Stand der Technik werden entweder globale oder lokale Schwellen verwendet, um ein Bild zu binärisieren. Für Fingerabdruckbilder ist eine Binärisierung mit globaler Schwelle oftmals nicht geeignet. Auch Verfahren, die mit einer lokalen Schwelle arbeiten, liefern häufig keine zufriedenstellende Ergebnissen. Daher wird vorzugsweise das Binarisierungsverfahren von Marr und Hidreth verwendet. Dieses Verfahren basiert auf einem mit einem Gauß-Filter geglätteten Bild. Die Maskengröße des Gauß-Filters ist 7×7.

Gemäß dem Marr-Hildreth-Binärisierungsverfahren wird in einem ersten Schritt das Grauwert-Rasterbild mittels eines Gauß-Filters geglättet. Anschließend entscheidet ein Laplace-Operator (Laplacien of Gauß), ob Kanten in vier unterschiedlichen Richtungen vorhanden sind. Das implementierte Verfahren braucht ca. 90 ms für eine Bildgröße von 280x200 mit einem Pentium PC 200MHz.

Man kann anstatt des Gauß-Filters auch ein Mittelwert-Filter benutzen, das einfacher zu implementieren und schneller ist. Die beiden Verfahren liefern sehr ähnliche Ergebnisse, wobei das Gauß-Filter einen etwas besseren Glättungseffekt hat. Die Binärisierung mit dem Mittelwert-Filter dauert nur noch etwa 35 ms. Die Maskengröße des Filters beträgt 16x16. Diese Größe ist am erwarteten Linienabstand orientiert. Da der individuelle Linienabstand noch nicht gemessen ist, wird als Erfahrungswert der durchschnittliche Linienabstand genommen.

Nach der Binärisierung kann man den Linienabstand messen. Der Linienabstand beschreibt eine Periode schwarzer Linien auf weißem Untergrund (Fig. 12). Der Linienabstand ist ein wichtiges Maß bezüglich der Maskengröße verschiedener Filter für die Merkmalsextraktion und den Merkmalsvergleich. Unterschiedliche Fingerabdrücke haben unterschiedliche Linienabstände. Fingerabdrücke von jüngeren Leuten besitzen relativ feine Linien und daher einen kleinen Linienabstand, bei Kindern ist er besonders klein. Der Wert kann bei 500 dpi Bildauflösung zwischen 7 bis 18 Pixeln liegen. Auch bei ein-und demselben Fingerabdruck gibt es verschiedene lokale Linienabstände.

Zur Bestimmung des Linienabstands summiert man die Länge der Schwarz- und Weißübergänge in horizontaler und vertikaler Richtung (die untauglichen Linienabstände sollen ignoriert werden) und bildet davon den Mittelwert (n ist die Anzahl der Übergänge):

$$\overline{d} = \frac{1}{n} \sum_{i=1}^{n} d_i$$

### 2.2 Generieren des Konturbilds

Die durch Binärisierung erzeugten Konturen können durch Konturenkodes beschrieben werden. Das Grundprinzip besteht darin, daß man entlang der Kontur, von einem Randpunkt der Kontur als Startpunkt aus, im Uhrzeigersinn wandert und dabei die Koordinaten x und y der gefundenen Punkte speichert. Das Verfahren ist für eine Kontur beendet, sobald man wieder am Startpunkt angelangt ist. Aus dem Konturenkode können viele interessante Eigenschaften einer Kontur abgeleitet werden, wie z.B. Länge, Fläche, Neigung, Schwerpunkt usw. Außerdem bietet der Konturenkode eine hilfreiche Möglichkeit, sich entlang der Kontur zu bewegen. Es gelten die folgenden Formeln:

*Länge einer Kontur n : Länge des Wanderungswegs*
*Schwerpunkt einer Kontur :*

$$\overline{x} = \frac{1}{n} \sum_{i=0}^{n} x_i$$

$$\overline{y} = \frac{1}{n} \sum_{i=0}^{n} y_i$$

*Fläche einer Kontur :*

$$S = \sum_{i=0}^{i=n} (x_{i+1} - x_i)$$

*Steigung einer Kontur :*

$$\tan(2\alpha) = \frac{2C_{xy}}{C_{xx} - C_{yy}}$$

*wobei*

$$C_{xy} = \sum_{i=0}^{n} (x_i - \overline{x})(y_i - \overline{y})$$

$$C_{xx} = \sum_{i=0}^{n} (x_i - \overline{x})(x_i - \overline{x})$$

$$C_{yy} = \sum_{i=0}^{n} (y_i - \overline{y})(y_i - \overline{y})$$

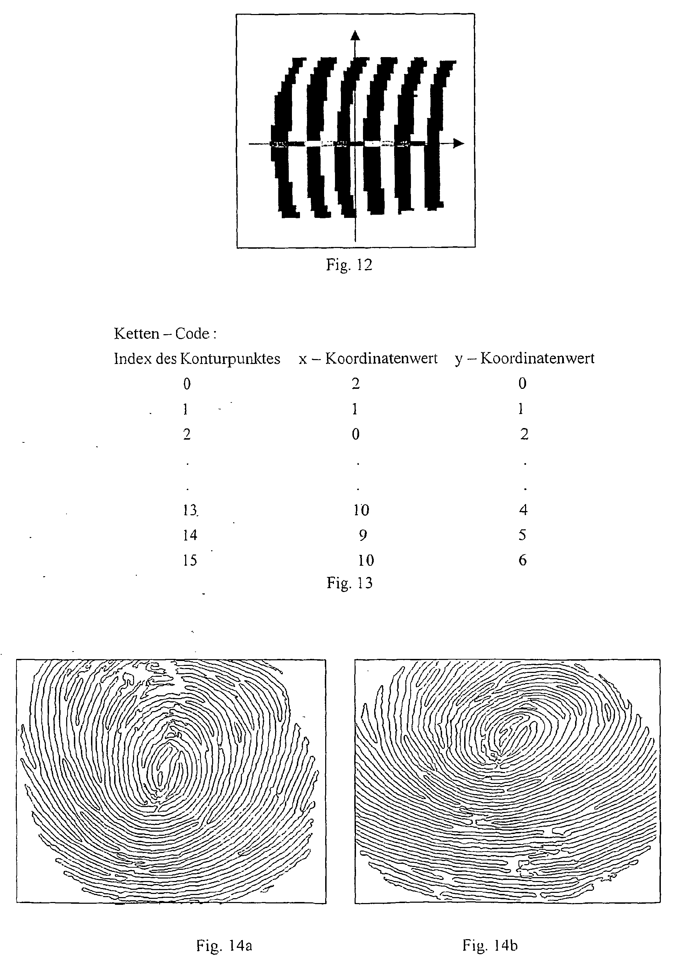

In Fig. 13 ist die Konturencodestruktur beispielhaft dargestellt. Fig. 14 und 14b zeigen zwei unterschiedliche Konturbilder.

## 2.3 Erzeugung von Richtungs- und Gütebild

Die Erzeugung des Richtungsbildes basiert auf dem Konturenkode. Die Rechenzeit wird dadurch erheblich verkürzt, da alle Operationen für die Richtungsbestimmung nur mit den Konturenpunkten verbunden sind. Die im Stand der Technik verwendeten Verfahren zum Richtungsextrahieren analysieren hingegen jedes Pixel im Grauwertbild oder Binärbild. Für eine Bildgröße 280x200 entspricht dies einer Operationsmenge von 560,000 Pixeln, im Konturenbild kann die Operationsmenge um einen Faktor 4 bis 9 verkleinert werden (Der Faktor entspricht in etwa dem Linienabstand).

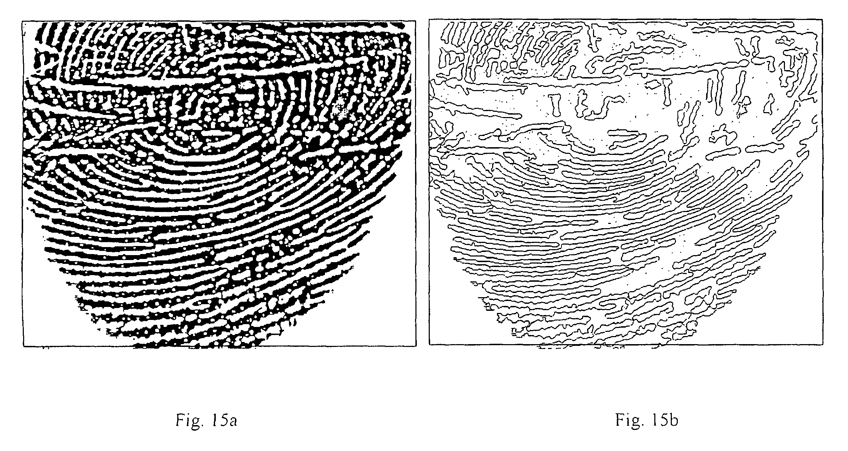

Aus dem Konturenkode lassen sich viele nützlichen Eigenschaften der Konturen ableiten, wie die Länge, Fläche und Steigung. Rauschen und Verzerrungen lassen sich dann schnell erkennen. Zum Beispiel besitzen kurze zerbrochene Linien eine relativ kleine Länge und Fläche, auf Rauschen zurückzuführende Linien noch kleinere. Bei der Richtungsbestimmung kann man solche störenden Konturen ignorieren. Dadurch ist es möglich, ein zuverlässiges Richtungsbild zu generieren. Gerade in Bereichen, wo Rauschen und Verzerrungen vorkommen, verhalten sich die Richtungen sehr lokal und zufällig. Solche Richtungen sollen gar nicht erst berechnet werden, da es sonst schwierig ist, bei der Verbereitung von Konturenrichtung zur Pixelrichtung, die gültigen von den falschen zu unterscheiden. Fig. 15a und 15b zeigen ein Binärbild und ein aus dem Binärbild abgeleitetes Konturenbild, in dem Rauschen und Verzerrungen gekennzeichnet sind.

Die Erzeugung des Richtungsbildes ist in zwei Schritten implementiert.

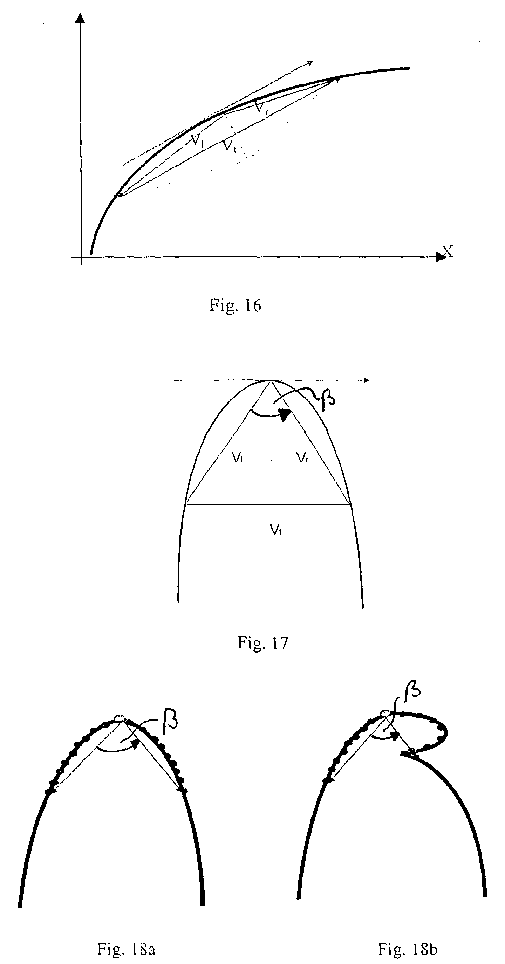

a) Erzeugung der Konturenrichtung: Mit der Konturenkodestruktur kann man sich einfach und schnell auf der Kontur bewegen. Mit einem Zweibein entlang der Kontur wird jeweils die Tangentenrichtung für einen Punkt (x, y) berechnet (Fig. 16). Es gilt:

$$\tan\alpha = \frac{dy}{dx}$$

wobei:

Vektor $V_t$ und $V_r$: Zweibein
Tangentvekor : $V_t$ (dx, dy) = $V_l$- $V_r$
$\alpha$ : Tangentwirkel

Die Tangentenrichtungen in der Nähe von Linienenden, Verzweigungen und Verzerrungen werden nicht berücksichtigt, da die Krümmung solcher Punkte nicht dem echten Linienverlauf entspricht. Die Stellen besitzen meistens einen spitzen Winkel oder ein nicht gut definiertes Zweibein. Sie können durch Prüfen der Winkel und der Länge des Zweibeins erkannt werden. Der Winkel eines Zweibeins wird mittels der nachfolgenden Formel berechnet (Fig. 17). Wenn der Winkel $\beta$ kleiner als 120° ist, wird die entsprechende Tangentenrichtung $\alpha$ nicht akzeptiert.

Skalarprodukt :

$$\cos\beta = \frac{V_l V_r}{|V_l V_r|}$$

wobei :

$V_l$ und $V_r$ : Vektoren des Zweibeins
$\beta$: Winkel des Zweibeins

Ein reguläres Zweibein und ein typisches irreguläres Zweibein (verzerrte Kontur) sind in Fig. 18 dargestellt. Normalerweise ist die Länge eines Zweibeins nach links und rechts fast gleich, sie entspricht in etwa auch dem Wanderungsschritt auf der Kontur. Ein irreguläres Zweibein hat dagegen unterschiedliche Beinlängen nach links und rechts bzw. diese Längen sind kürzer als der Wanderungsschritt. Wenn die Unterschiede über einem Schwellenwert liegen, wird dieses Zweibein nicht genommen. Dadurch werden nur die gut definierten Tangentenrichtungen berechnet.

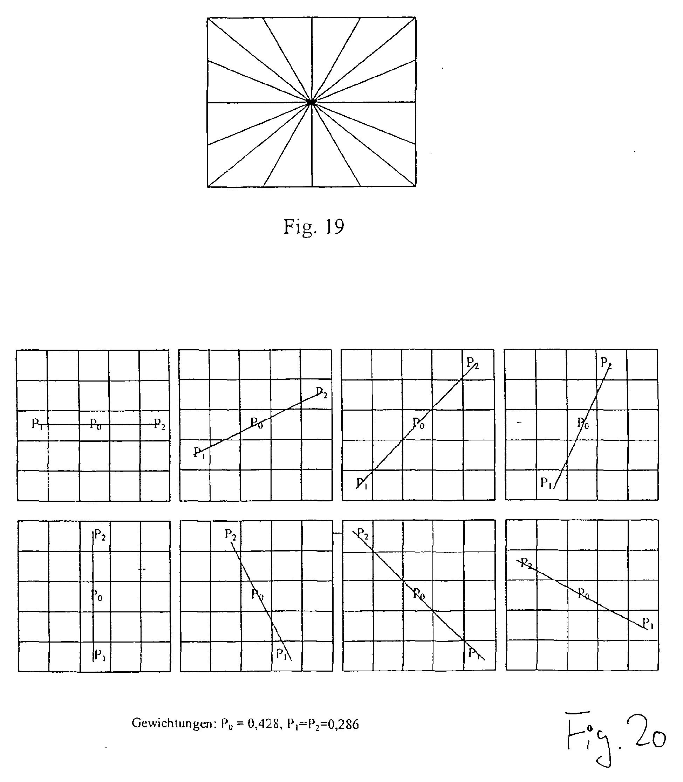

Der Winkel einer Tangentenrichtung wird approximativ durch einen Richtungskode ersetzt. Acht Hauptrichtungen werden verwendet (Fig. 19). Der Richtungskode ist von 1 bis 8 numeriert. Kode 0 bedeutet, daß keine Verlaufsrichtung vorhanden ist. Winkel und Richtungskode haben folgende Beziehung:

$$\alpha = 22.5^{\circ} \times (\text{code} - 1)$$

Wenn die Tangentenrichtung für jeden Punkt auf der Kontur untersucht und entsprechend codiert worden ist, ist das Konturenrichtungsbild erstellt.

b) Von der Konturenrichtung zur Pixelrichtung: Die anisotrope Glättung soll sich nicht nur auf die Konturen beschränken, sondern das ganze Bild erfassen. Dafür ist die Richtungsinformation für jedes Pixel erforderlich. Um von der Konturenrichtung zur Pixelrichtung zu gelangen, wurden folgende Annahmen gemacht:

- unmittelbar benachbarte Konturen haben die gleiche Verlaufsrichtung;
- Richtungsänderungen innerhalb einer Umgebung sollen kontinuierlich sein; und
- für Bereiche, in denen Rauschen und Verzerrungen vorhanden sind, soll die Richtungsinformation aus benachbarten Bereiche, in denen gültige Richtungen bestimmt werden können, geholt werden. Wenn die benachbarten Bereiche keine nützliche Richtungsinformation liefen, dann sollen solche Bereiche auch keine Richtungsinformationen enthalten (Kode 0). Das implementierte Verfahren läuft wie folgt ab:
- Wenn zwei benachbarte Punkte auf einer Kontur den gleichen Richtungscode haben, wird eine Linie durch die beiden Punkte mit diesem Richtungskode gezogen. Der maximale Abstand der beiden Punkte soll kleiner als der Linienabstand sein, sonst werden sie nicht als benachbart anerkannt. Dies wird jeweils in horizontaler und vertikaler Richtung für das ganze Bild gemacht. Nach einem Durchlauf haben die meisten Papillarlinien und der Untergrund einen Richtungskode bekommen. Bereiche, die noch den Richtungscode 0 haben, sind Bereiche in denen Rauschen oder Verzerrungen vorhanden sind.
- Richtungsfüllung mit Hilfe der Kontinuitätsannahme und der Richtungsinformation von Nachbarn: In einer kleinen Umgebung sollen sich außerhalb des Kern- oder Deltabereiches die Richtungen nicht drastisch ändern (diese Eigenschaft wird später bei der Suche nach Kern und Delta benutzt). Jeder Durchlauf erfolgt in horizontaler und vertikaler Richtung. Zum ersten wird die vorhandene Richtungsinformation in einer Zeile (Spalte) gesammelt und dann systematisch analysiert. Es gibt verschiede Situationen: (1) ganz schmale Schwarzlücken werden einfach durch ihre benachbarte Richtung ersetzt. (2) relativ große Lücken werden folgendermaßen behandelt.

**Fall 1**: innerhalb eines homogenen Richtungsfeldes werden, wenn die linke (obere) Seite und rechte (untere) Seite die gleiche Richtung besitzen, solche Lücken durch diese Richtung ersetzt.
**Fall 2**: Innerhalb zweier unterschiedlicher Richtungsfelder werden, wenn die beiden Richtungen (Richtungkodes) benachbart sind (wie 0 zu 1 oder 1 zu 2 usw.), die Lücken durch die beiden Richtungen mit unterschiedlichem Anteil ersetzt. Der Anteil wird wie folgt berechnet

$$A_1 = \frac{L_1}{L_1 + L_2} L_{\text{lücke}}$$

$$A_2 = \frac{L_2}{L_1 + L_2} L_{\text{lücke}}$$

wobei $L_1$ und $L_2$ jeweils die Länge eines der beiden benachbarten Richtungsfelder und $A_1$ und $A_2$ den mit einer bestimmten Richtung ersetzten Anteil der Gesamtlänge beider Richtungsfelder bezeichnen.
**Fall 3**: Korrigieren von falsch gefüllten Richtungen: wenn eine kurzes Stück innerhalb einer dominierenden Richtung eine andere Richtung aufweist, dann wird dieses Stück durch die dominierende Richtung ersetzt.
Dieser Ablauf wird in drei Iterationen durchgeführt.
Das Zwischenergebnis aus Phase 2 nach einer Iteration wird verwendet, um das Gütebild abzuleiten. Die zugrundeliegende Idee ist, daß wenn eine Umgebung einen sauberen Linienverlauf hat, dann sollten die ausgefüllten Pixelrichtungen eine genügende Verteilung in dieser Umgebung besitzen. Das Pixel-Richtungsbild wird in kleine Parkettzellen mit der Größe 2,5×Linienabstand (etwa 16x16 Pixel) zerlegt. Die Qualität einer Parkettzelle ist mit drei Stufen ("gut", "mittelmäßig" und "schlecht") definiert. Stufe "gut" entspricht dem gut definierten Bereichen, Stufe "mittelmäßig" entspricht dem verbesserbaren Bereichen, Stufe "schlecht" entspricht nicht verbesserbaren Bereichen. In jeder Parkettzelle wird die Summe der gültigen Richtungen berechnet:

$$sum(i, j) \;=\; \sum_{y=-\frac{m}{2}}^{y=+\frac{m}{2}} \sum_{x=-\frac{m}{2}}^{x=+\frac{m}{2}} r(x, y) \neq 0$$

Eine Parkettzelle (i, j) wird als "gut" bewertet, wenn sum (i, j) über einem ersten Schwellenwert $T_1$ liegt, als "mittelmäßig", wenn sum (i, j) unter $T_1$ aber über einem zweiten Schwellenwert $T_2$ liegt, und als "schlecht", wenn sie unter $T_2$ liegt ( z.B. $T_1$ =0.85, $T_2$=0.55). Um Randbereiche zu ignorieren, wird die Parkettzelle jeweils nach links, rechts, unten und oben um 8 Pixel verschoben, die Summenhistogramme werden jeweils noch einmal bewertet. Der Gedanke war, wenn die Parkettzellen am Rande verschoben werden, dann können ihre Summenhistogramme nicht gleichzeitig die Schwelle $T_2$ erfüllen.

Das Gütebild wird am Ende noch geglättet. Dabei gibt es zwei Fallunterscheidungen:

a. Parkettzelle mit Güte "gut" oder "mittelmäßig": wenn die direkt benachbarten Parkettzellen alle mit der Güte "schlecht" bewertet sind, wird diese Parkettzelle ebenfalls mit der Güte "schlecht" bewertet.
b. Parkettzelle mit Güte "schlecht": wenn die direkt benachbarten Parkettzellen alle mit der Güte "gut" oder "mittelmäßig" definiert sind, wird diese Parkettzelle ebenfalls mit der Güte "mittelmäßig" bewertet.

### 2.4 Bildverbesserung durch anisotrope Glättung

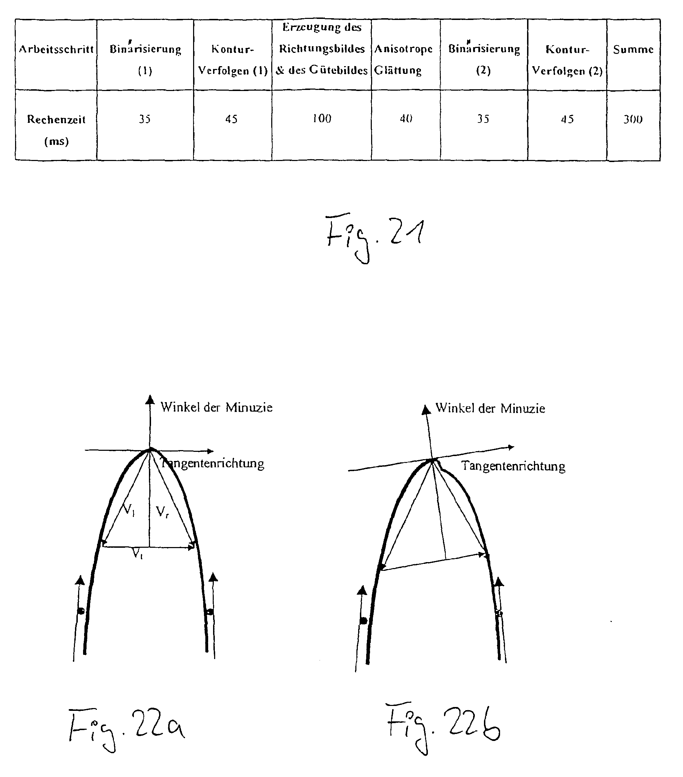

Es wurde bereits erwähnt, daß eine Bildverbesserung im Spektralbereich in der Regel zu zeitaufwendig ist. Aus diesem Grund wird die Bildverbesserung im Ortsbereich in Form einer anisotropen Glättung implementiert. Eine Linie wird in ihrer Verlaufsrichtung durch ein eindimensionales Gauß-Filter verbessert. Die Maskengröße ist 1×5. In Fig. 20 sind die Gewichtungen der Masken und ihre Richtungsabhängigkeit dargestellt.

### 2.5 Zweite Binärisierung und zweites Konturenverfolgen

Das mittels anisotroper Glättung verbesserte Bild wird noch einmal binärisiert, wobei diesmal ein Gauß-Filter anstatt des Mittelwert-Filters Verwendung finden kann. Im Vergleich mit dem ersten Binärbild besitzt das zweite Binärbild eine wesentlich bessere Qualität: die zerbrochene Linien sind geschlossen, die Löchern sind gefüllt und Rauschen sowie Verzerrungen sind gelöscht oder repariert. Die Konturen des zweiten Binärbilds werden wie vorstehend beschrieben verfolgt und als Konturenkodestruktur gespeichert. Basierend auf diesem Konturenkode erfolgt als nächster Schritt die Minuzienextraktion.

### 2.6. Ergebnisse

Es wurde mit einer Eingabebildgröße von 640 x 480 Pixeln gearbeitet. In einem ersten Schritt wurde der Papillarlinienbereich durch Wegschnitt am Rand segmentiert und anschließend skaliert. Die Bildgröße wurde so auf ungefähr 300 x 200 Pixel reduziert. Die gesamte Rechenzeit betrug auf einem Pentium PC 200 MHz bei einem in ANSI-C geschriebenen Programm ungefähr 300 ms (Fig. 21).

### 3. Minuzienextraktion

Die Minuzienextraktion basiert auf dem wie vorstehend beschrieben erzeugten (zweiten) Konturenbild. Die unechten Minuzien werden zusätzlich durch einen weiteren Analyseschritt (Postprocessing) behandelt. Die Ermittlung von globalen Merkmale wie Kern und Delta wird in dem Kapitel "Klassifikation" weiter unten näher erläutert. Die Minuzienextraktion im Konturenbild ist aus mehreren Hinsichten von Vorteil:

- auf die aufwendige Skelettierung kann verzichtet werden;
- die Eigenschaften der Konturen lassen aussagekräftige Kriterien ableiten, um verrauschte Konturen, und damit potentiell unechte Minuzien, auszuschließen;
- anhand der Kontur sind die Minuzien einfach zu bestimmen, weil die Konturen an Stellen von Linienenden oder Verzweigungen einen spitzen Winkel besitzen; und
- die Winkel kann man mit einem Zweibein messen, so daß sich durch Prüfen der Eigenschaften des Zweibeins das Extrahieren von unechten Minuzien vermeiden läßt.

Diese Vorteile ermöglichen eine zuverlässige Ermittlung von Minuzien. Dies ist von großer Bedeutung, da unechte Minuzien die Individualität eines Fingerabdruckes verändern können und einen glaubwürdigen Vergleich ausschließen.

Nach der Minuzienextraktion sind in der Regel noch einige unechten Minuzien vorhanden, die hauptsächlich aus den zusammengeklebten Linien stammen. Eine nachfolgende Analyse wird implementiert, um die unechten Minuzien zu beseitigen. Die Analyse verwendet den Abstand sowie die Lage zwischen den Minuzien als Kriterium, um die unechten Minuzien zu erkennen. Bei zusammengeklebten Linien häufen sich relativ viele Minuzien in einer kleinen Umgebung. Die Minuzien von Falten werden zusammengefaßt und als ein einziges Merkmal (Falte) erfaßt.

Konturen lassen sich in zwei Klassen einteilen: reguläre und irreguläre Konturen

- reguläre Kontur: Eine Kontur ist regulär, wenn sie kontinuierlich in einer lokale Umgebung verläuft und ihre Länge und Fläche wohl definierte Eigenschaften besitzen.
- irreguläre Kontur: Eine Kontur ist irregulär, wenn sie in einer lokalen Umgebung unterbrochen ist, nicht mehr kontinuierlich in einer Richtung verläuft oder ihre Länge bzw. Fläche eine hinreichende Größe nicht erreicht hat. Es gibt mehrere Typen von irregulären Konturen, wie:

  - Rauschen: kleine isolierte Konturen, die eine kleine Konturenlänge und Fläche besitzen.
  - Löcher: innerhalb einer Linie sind Hautschweißporen vorhanden, welche sich als kleine weiße Löcher bemerkbar machen. Durch die Richtungsglättung werden die Poren zu größeren weißen Gebieten innerhalb der Papillarlinie zusammengefaßt. Diese Struktur ähnelt dann stark einem Auge. Augen sind die Stellen, an denen sich Papillarlinien zunächst verzweigen und dann im weiteren Verlauf wieder vereinigen.
  - Narben: in einem großem Bereich treten viele irreguläre Konturen auf.
  - Zerbrochene Linien: der kontinuierliche Linienverlauf wird unterbrochen, dies verursacht mehrere aufeinanderfolgende kurze Konturen. Zerbrochene Linien kommen vor, wenn es sich um einen Abdruck eines trockenen oder faltenreichen Fingers handelt.
  - Zusammengeklebte Linien: der Untergrund zwischen mehreren Linien ist nicht eindeutig zu erkennen. An diesen Stellen werden irreguläre Verzweigungen ermittelt. Sie kommen besonders dann vor, wenn ein Fingerabdruck durch Abrollen gewonnen worden ist oder sein Linienabstand verhältnismäßig klein ist.
  - Beulen: sie treten auf, wenn der Abstand der Hautschweißporen vom Rand der Papillarlinie zu klein ist, so daß die sonst in Inneren der Papillarlinie befindliche weiße Fläche mit dem weißen Hintergrund verschmiert.
  - Falten: große Leerflächen zwischen den Linien.
  - Verzerrungen: die Linien verlaufen nicht mehr kontinuierlich, sondern mit kleinen lokalen Verzerrungen. Verzerrungen sind durch irreguläre Aufnahmeverhältnisse bedingt, beispielsweise kleine Schwankungen oder Bewegung des Fingers während der Aufnahme.

Bei regulären Konturen handelt es sich um ein leichte Aufgabe, die entsprechenden Merkmale aus den Konturen zu extrahieren. Irreguläre Konturen sind jedoch normalerweise nach der Bildaufbereitung mehr oder weniger im Bild zu sehen, so daß es schwierig ist, die echten Minuzien zu bestimmen. Irreguläre Konturen werden wie folgt behandelt:

a) Rauschen läßt sich durch Überprüfen der Konturenlänge und Konturenfläche schnell erkennen und eliminieren.
b) Die Konturenlänge und Breite entscheidet, ob eine weiße Insel ein Loch oder ein Auge ist.
c) Narben können mit Hilfe des Gütebildes ignoriert werden, denn der Bereich, wo eine Narbe vorkommt, wird im Gütebild als nicht verbesserbarer Bereich gekennzeichnet.
d) Die Behandlung von zerbrochenen oder zusammengeklebten Linien, Beulen, Verzerrungen und Falten wird in den folgenden Abschnitten erläutert.

### 3.1 Ermittlung von Minuzien

Die Minuzien werden mittels eines Zweibeins extrahiert indem in jedem Punkt der Kontur ein Zweibein konstruiert und die Eigenschaft des Zweibeins geprüft wird. Ein Zweibein besteht aus einem linken Bein, einem rechten Bein und dem Winkel zwischen den Beinen. In Fig. 18a und 18b sind ein reguläres und ein irreguläres Zweibein dargestellt.

Ein Punkt wird als möglicher Kandidat für eine Minuzie in einer Liste gespeichert, wenn das Zweibein des Punktes gleichzeitig folgende drei Bedingungen erfüllt:

a) Der Winkel W des Zweibeins liegt innerhalb eines bestimmten Winkelintervalls $W_{min} < W < W_{max}$,
b) Der Längenunterschied zwischen dem linken Bein und den rechten Bein ist kleiner als ein Schwellenwert $D_t$ ($D_t$ = Linienabstand /3),
c) Der Längenunterschied zwischen dem Wanderungsschritt auf der Kontur und der Länge des linken Beins oder des rechten Beins ist kleiner als der Schwellenwert $D_t$ oder ein anderer Schwellenwert.

Die oben genannten Bedingungen sind aus folgenden Überlegungen zustande gekommen.

- Ein Linienende oder eine Verzweigung besitzen einen spitzen Winkel ($W<W_{max}$), wobei dieser Winkel nicht zu klein sein sollte, da z.B. Beulen durch verhältnismäßig kleine Winkel charakterisiert sind, die sie von den Winkeln echter Minuzien unterscheiden ($W>W_{min}$).
- Wenn eine Kontur kontinuierlich verläuft, haben die Zweibeine auf der Kontur eine wohl definierte Eigenschaft und zwar haben die Beine fast die gleiche Länge nach links und rechts. Auch unterscheidet sich diese Länge kaum von der Länge auf der Kontur zwischen dem Anfangs- und Endpunkt des jeweiligen Beines auf der Kontur. Die Zweibeine von Verzerrungen und zusammengeklebten Linien verhalten sich dagegen anders: die Längenunterschiede sind zufällig und meistens relativ groß. Durch das Vorsehen der oben genannten Schwellenwerte läßt es sich vermeiden, Minuzien aus verzerrten oder zusammengeklebten Konturen zu extrahieren.

Für jede Liste wird eine Liste von Minuzienkandidaten hergestellt. Die Kandidaten werden dann analysiert:

a) Bestimmung der Koordinatenwerte der Minuzie: Wenn in einer kleinen Umgebung mehrere Kandidaten gefunden wurden, dann wird nur der Kandidat, der den kleinsten spitzen Winkel hat, als einzige echte Minuzie betrachtet. Die einzige Minuzie nimmt die Koordinatenwerte dieser Stelle ein.

b) Bestimmung des Winkels der Minuzie: Die einfachste Variante ist, daß man die senkrechte Verlaufsrichtung zur Tangentenrichtung der Minuzie als Winkel nimmt (Fig. 22a). Der Nachteil ist, daß eine kleine Änderung der Kontur schon eine große Auswirkung auf diesen Winkel hat (Fig. 22b). Aufgrund der Glättung sind solche Änderungen aber unvermeidbar. Daher versucht man, relativ stabile Winkel für die Minuzie zu nehmen. Man geht von der Minuzienposition jeweils nach links und rechts einige Schritte zurück und bestimmt die Tangentenrichtungen in diesen Stellen. Der Winkel der Minuzie nimmt dann den Mittelwert beider Tangentenrichtungen an. Es ist Fig. 22b zu entnehmen, daß dieser Winkel viel stabiler ist.

Auf einer Kontur kann man noch einige einfache Anhaltspunkte benutzen, um eventuelle unechte Minuzien auszuschließen:

a) Wenn die Kandidatenanzahl um eine Stelle kleiner als zwei ist, werden diese Kandidaten nicht als echte Minuzien berücksichtigt, da sie wahrscheinlich aus einer irregulären Kontur stammen. Bei einer regulären Kontur existieren dagegen mehrere Kandidaten um eine Minuzie (>2).

b) Zwei Minuzien aus einer Kontur dürfen nicht zu nahe beieinander liegen (die Schwelle ist etwa 2 x Linienabstand). Andernfalls werden die beiden Minuzien zu einem Merkmal zusammengefaßt.

Die wie vorstehend erläutert erzeugten Minuzien werden Rohminuzien genannt.

**3.2 Beseitigung von unechten Minuzien (Postprocessing)**

Nachdem alle Minuzien extrahiert wurden, müssen noch die irrtümlich extrahierten, unechten Minuzien beseitigt werden. Die unechten Minuzien stammen meistens aus Falten, Poren, zerbrochenen oder zusammengeklebten Linien. Folgende Regeln werden implementiert.

a) Wenn zwei Minuzien sehr nahe beieinander liegen (möglicherweise aus zerbrochenen Linien), werden beide gelöscht. Die Abstandsschwelle beträgt etwa $0.7 \times$ Linienabstand.

b) Wenn eine Kontur nicht länger als $6 \times$ Linienabstand ist, nur eine oder zwei Minuzien hat und eine weiße Fläche besitzt, wird diese Kontur genau analysiert, denn sie kann nur eine Pore oder ein Auge sein. Dabei dient die Breite der Kontur als Unterscheidungskriterium. Wenn die Breite größer als der Linienabstand/3 ist, wird diese weiße Insel als Auge, sonst als Pore deklariert.

c) Wenn mehrere Minuzien sich in einer Umgebung befinden und die Minuzien paarweise aufeinander zeigen (über 100 Grad Winkeldifferenz), sich nicht weiter voneinander trennen (die Schwelle ist etwa $1.2 \times$ Linienabstand) und keine Linien zwischen ihnen verlaufen, werden zwei Fallunterscheidungen gemacht,

Wenn die Minuzienanzahl über einem Schwellenwert $M_t$ liegt, werden die Minuzien als Minuzien aus Falten verdächtigt und als ein besonderes Merkmal (Falte) zusammengefaßt, und zwar mit dem Schwerpunkt der Minuzien. Ansonsten werden solche Minuzien gelöscht, die wahrscheinlich von zusammengeklebten Linien oder Verzerrungen stammen.

d) Wenn zwei benachbarte Minuzien sich nicht weiter voneinander trennen (die Schwelle ist etwa $1.0 \times$ Linienabstand)

und fast parallel zueinander verlaufen (die Winkeldifferenz ist kleiner als 30 Grad), dann werden die beide Minuzien zu einer einzigen Minuzie zusammengefaßt (mit dem Schwerpunkt von beiden).

e) Wenn der Winkel einer Minuzie nicht der Verlaufsrichtung der zugehörigen Kontur entspricht, wird diese Minuzie gelöscht.

f) Randminuzien und Rohminuzien aus nicht verbesserbaren Bereichen werden mit Hilfe des Gütebilds eliminiert.

### 3.3 Ergebnisse

Die vorstehend beschriebene Minuzienextraktion benötigt auf einem Pentium PC 200 MHz eine Rechenzeit von typischerweise 100 ms und ist deutlich schneller als alle im Stand der Technik bekannten Verfahren. Ein Vergleich des implementierten Verfahrens mit den Verfahren des Stands der Technik ist jedoch schwierig, da die Bildqualität der im Stand der Technik verwendeten Fingerabdrücke sehr unterschiedlich ist, die meisten Autoren keine Statistik über die Verteilung der gefundenen echten und unechten Minuzien angeben und eine exakte Unterscheidung zwischen echten und unechten Minuzien nicht einfach ist. Gleichwohl ist die vorstehend beschriebene Behandlung von potentiellen unechten Minuzien im Vergleich zu herkömmlichen Verfahren wesentlich sorgfältiger und daher zuverlässiger.

### 4. Minuzienvergleich

Ein Minuzienvergleich mit mehreren Iterationen für die Abschätzung der Transformationsparameter wird implementiert. Als erster Schritt werden die Parameter grob geschätzt. Anschließend werden die geschätzten Parameter bewertet und korrigiert. Die Korrektur geschieht mittels einer Kostenreduktion. Die korrigierten Parameter werden iterativ nochmals zum Minuzienvergleich eingesetzt.

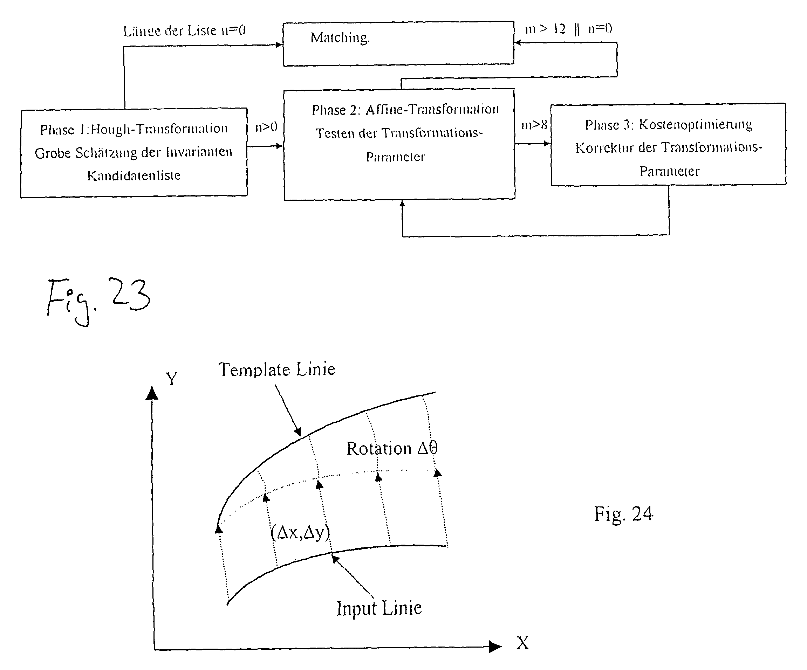

Die genauen Arbeitsschritte des Verfahrens sehen folgendermaßen aus (Fig. 23):

**Phase 1**: Mit einer Hough-Transformation werden die Transformationsparameter im Hough-Raum verteilt, gruppiert und mit einem Gütemaß versehen. Die Parameter, deren Güte über eine bestimmten Schwellenwert liegt, werden in einer Kandidatenliste gespeichert. Falls keine Transformationsparameter existieren, deren Güte über dem Schwellenwert liegt (n = 0), wird der Minuzienvergleich beendet. Ansonsten wird mit Phase 2 fortgefahren.

**Phase 2**: Mittels der in Phase 1 geschätzten Transformationsparameter werden die Eingabeminuzien transformiert und mit den Referenzminuzien verglichen. Wenn die Anzahl der korrespondierenden Minuzien über einem bestimmten Schwellenwert liegt (m > 12), wird der Vergleichsprozeß automatisch beendet und ein positives Vergleichsergebnis ausgegeben. Wenn alle potentiellen Kandidaten für Tranformationsparameter geprüft sind (n = 0), wird der Vergleichsprozeß ebenfalls beendet (Minuzienvergleich gescheitert). Ansonsten gibt es zwei Möglichkeiten: (1) Die Anzahl m der Paare hat zwar den erforderlichen Schwellenwert 12 nicht erreicht, aber sie ist schon gut genug (m > 8). In diesem Fall geht es zur Phase 3. (2) Die Anzahl der Paare ist zu gering (m ≤ 8). In diesem Fall werden weitere Parametersätze aus der in Phase 1 erstellten Kandidatenliste in Phase 2 getestet.

**Phase 3**: Eine Kostenfunktion wird definiert. Durch Optimierung der Kostenfunktion werden die in Phase 1 grob geschätzten Parametern korrigiert. Anschließend wird mit den korrigierten Parametern Phase 2 erneut durchlaufen.

### 4.1 Phase 1: Hough-Transformation zur Abschätzung der Transformationsparameter

Hough-Tansformationen werden bei der Erkennung von geometrischen Objekten wie Geraden, Kreisen usw. eingesetzt. Die geometrischen Objekte sind dabei im Ortsraum durch Parameter zu charakterisieren. Der entsprechende Parameterraum ist der Hough-Raum der betrachteten Objekte. Eine Gerade kann zum Beispiel durch zwei Parameter d und $\alpha$ dargestellt werden. Ein Punkt im Ortsraum definiert derart eine Parametermenge (z.B. Parameter aller Geraden, die durch den Punkt im Hough-Raum verlaufen):

$$d = x \cos \alpha + y \sin \alpha$$

Für Punkte, die mit demselben Objekt verknüpft sind, liegt die Parametrisierung dieses Objektes in der Schnittmenge der Parametermengen dieser Punkte im Hough-Raum. Die allgemeine Aufgabe kann so beschrieben werden, daß Bildpunkte zu gruppieren sind, die (in etwa) einem Objekt der betrachteten Klasse "entsprechen". Der allgemeine Lösungsweg besteht aus folgenden Schritten:

1. Für jeden Bildpunkt sind die entsprechenden Parametermengen im Hough-Raum zu bestimmen.
2. Für Parametermengen sind die Durchschnitte zu betrachten. Jeder Punkt in einer Durchschnittsmenge (im Hough-Raum) ist mit der Anzahl von Bildpunkten zu bewerten, für die er eine mögliche Parameterkombination ist.
3. Die Punkte im Hough-Raum mit einer hinreichend hohen Bewertung sind mit einem "erkannten" Objekt zu identifizieren.

Hough-Transformation ist gut geeignet für die Schätzung von TransformationEN. Eine Transformation kann man durch vier Parameter $t_x$, $t_y$ (Translationsvektor), s (Skalierung) und $\theta$ (Rotationswinkel) darstellen (Fig. 24). Da alle Punkte in einem Bild die gleiche Transformation besitzen, sollte sich eine hinreichend hohe Bewertung (engl. Peak) im Hough-Raum (Transformationsparameter) bei der tatsächlichen (geschätzten) Transformation ergeben. Wie erwähnt, ist die Hough-Transformation sehr gut geeignet für die Abschätzung der Transformationsparameter. Um das Schätzen eines geeigneten Satzes Transformationsparameter möglichst effektiv zu machen, werden folgende Forderungen aufgestellt:

- Unnötige Transformationen sollen durch Vorwissen möglichst vermieden werden.
- Der Parameterraum der theoretisch möglichen Transformationsparameter soll geeignet gruppiert werden, so daß bei derjenigen Transformation, welche als geschätzte Transformation bestimmt wird, eine hinreichend hohe Bewertung (Peak) auftritt.

Das Vorwissen über die Transformation steckt in den Minuzien selbst. Weil man vorher jedoch nicht weiß, welche Minuzien aus dem Eingabesatz und dem Referenzsatz die korrespondierenden Paare bilden, wird angenommen, daß jede Eingabeminuzie mit allen Referenzminuzien ein Paar bilden und entsprechend zueinander transformiert werden kann. Also probiert man nicht alle mögliche Transformationen aus, sondern nur diejenigen, welche eine beliebige Eingabeminuzie auf eine beliebige Referenzminuzie abbilden.
Gleichzeitig können viele unnötigen Transformationen schon vorher gestoppt werden: Der Rotationswinkel wird auf -45 Grad bis +45 Grad beschränkt und die Translationen in X-Richtung und Y-Richtung werden jeweils im Rahmen von etwa zwei Dritteln der Bildlänge bzw. Bildbreite festgelegt. Diese Beschränkungen entsprechen der Realität und reichen für normale Anwendungen wie Zutrittskontrollen aus.
Die Arbeitsschritte der ersten Phase sehen folgendermaßen aus:

a) Für jedes Minuzienpaar $(x^P, y^P, w^P)$ und $x^q, y^q, w^q$ aus dem Eingabemuster und dem Referenzmuster wird die inverse Transformation berechnet:

$$\begin{pmatrix} t^x \\ t_y \end{pmatrix} = \begin{pmatrix} x^q \\ y^q \end{pmatrix} - \begin{pmatrix} \cos\theta & \sin\theta \\ -\sin\theta & \cos\theta \end{pmatrix} \begin{pmatrix} x^p \\ y^p \end{pmatrix} \text{ und } \theta = w^p - w^q$$

Nur wenn $t_x$, $t_y$ und $\theta$ innerhalb des oben genannten Beschränkungsbereiches liegen, werden die entsprechenden Zähler im Hough-Raum erhöht. Vor dieser Erhöhung werden die berechneten Parameter noch mittels eines Quantisierungsschritts gruppiert:

$$\text{IF } \theta \in (\theta_1, \theta_L) \wedge t_x \in (t_{x1}, t_{xM}) \wedge t_y \in (t_{y1}, t_{yN})$$

THEN

dw = $\theta$/iw
dx = $t_x$/ix
dy = $t_y$/iy
Add evidence for (dw,dy,dy) $\Rightarrow$ A(dw,dx,dy) = A(dw,dx,dy) + 1

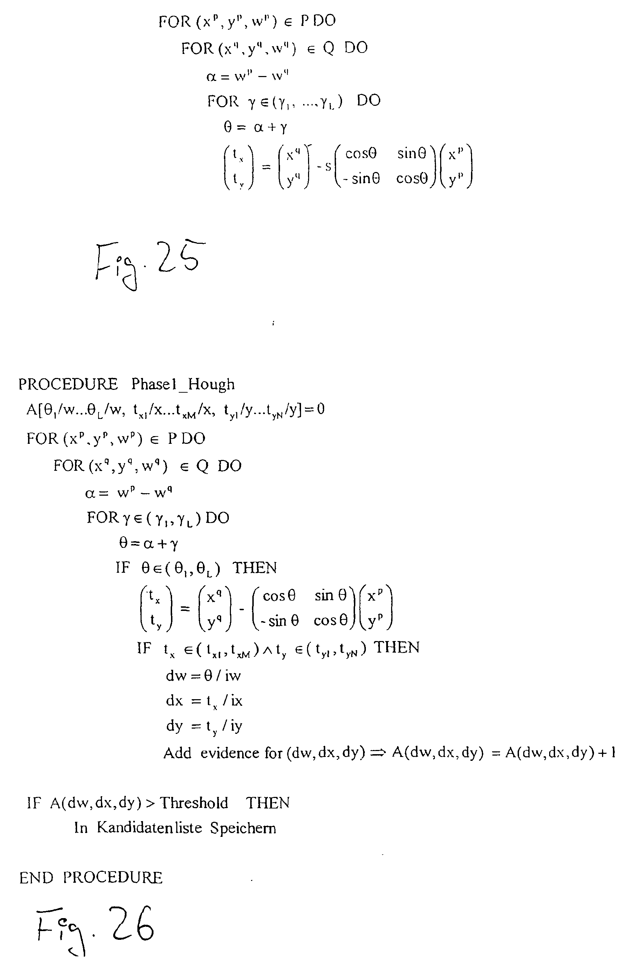

Wobei iw, ix und iy die Gruppierungsintervalle sind (iw = 3, ix = 8 und iy = 8). Die Intervallgrößen bestimmen sich aus dem Linienabstand und der Genauigkeit der Winkelbestimmung der Minuzie.
Die Quantisierung des Hough-Raums bewirkt eine deutliche Ausprägung der gültigen Transformationen. Die Notwendigkeit für die starke Quantisierung folgt aus dem Vorhandensein von nichtlinearen Verzerrungen und den Ungenauigkeiten im Prozeß der Bildaufbereitung und Minuzienextraktion. Die nichtlineare Verzerrungen werden dadurch verursacht, daß bei der Aufnahme ein dreidimensionaler Fingerabdruck plastisch auf einem zweidimensionalen Sensor liegt. Durch die Bildaufbereitung (Glättung, Binärisierung) und den Prozeß der Minuzienextraktion können Position und Winkel der Minuzie lokal verzerrt sein. Besonders problematisch ist der Winkel der Minuzien. Er ist schwierig exakt zu bestimmen, weil eine kleine Änderung der verbundenen Kontur große Auswirkung auf den bestimmten Winkel der Minuzie hat. Aus diesem Grund wird nicht nur die Winkeldifferenz zwischen $w^p$ und $w^q$ berücksichtigt, sondern werden auch einige Korrekturen der Winkeldifferenz in dem Hough-Raum mitgenommen. Die genaue Formulierung ist in Fig. 25 dargestellt. Die mathematische Formulierung der Phase 1 des Minuzienvergleichs ist in Abb. 26 dargestellt.

b) Nachdem alle Minuzien aus dem Eingabesatz und dem Referenzatz zueinander transformiert und die Winkelkorrekturen berücksichtigt wurden, ist der Hough-Raum vollständig bewertet. Der Hough-Raum ist im vorliegenden Fall ein dreidimensionaler Parameterraum A {dw, dy, dx}. Jedem Punkt in diesem Raum wurde eine Bewertung (Zähler) zugeordnet, und unter diesen werden die Maxima gesucht. Dieser Vorgang geschieht folgendermaßen,

- Die maximale Bewertung innerhalb des Hough-Raums wird gesucht (maxWert) und die Summe der gesamten Bewertung (allSum) um die Stelle des Maximums (Umgebung von 3x3x3) wird berechnet.
- Wenn diese Maximale Bewertung (maxWert<7) oder die Summe (allSum<13) ihrer Umgebung nicht groß genug ist, wird der Vergleichsvorgang als gescheitert beendet. Dies bedeutet, daß die beiden Minuziensätze möglicherweise nicht von dem gleichen Fingerabdruck stammen oder Translation und Rotation außerhalb des beschränkten Bereichs liegen. Ansonsten geht es weiter zum folgenden Schritt:

- Die möglichen Transformationsparameter werden in einer Kandidatenliste gespeichert. Außer dem Maximum und seiner Umgebung werden noch weitere Parametersätze mitgenommen, wenn ihre Bewertungen größer als ein bestimmter Schwellenwert ist. (Der Schwellenwert ist z.B. 5).

Phase 1 des Vergleiches ist mit vielen Berechnungen verbunden. Um die Rechenzeit zu reduzieren, werden Tabellen eingesetzt, zum Beispiel bei der Berechnung von Sinus und Kosinus für die affine Transformation (wie sin30° = sinusTab [30]) oder bei der Berechnung der Gruppierung (Dividieren durch die Intervalle).

### 4.2 Phase 2: Affine Transformation

Die aus Phase 1 gewonnene Kandidatenliste wird in Phase 2 analysiert. Die Kandidatenliste wird vorher noch nach der Bewertung (Güte) sortiert und die Transformationsparameter werden mit der jeweiligen Intervallgröße multi-pliziert $((dx, dy, dw) \rightarrow (t_x, t_y, \theta))$.
Die einzelnen Arbeitsschritte sind:

a) Aus der Kandidatenliste wird eine Transformation $(t_x, t_y, \theta)$ genommen (Wenn die Kandidatenliste leer ist, wird der Vergleichsvorgang als gescheitert beendet).
b) Die Eingabeminuzien werden mit den geschätzten Parametern transformiert.

$$\begin{pmatrix} x^t \\ y^t \end{pmatrix} = \begin{pmatrix} t_x \\ t_y \end{pmatrix} + \begin{pmatrix} \cos\theta & \sin\theta \\ -\sin\theta & \cos\theta \end{pmatrix} \begin{pmatrix} x^p \\ y^p \end{pmatrix} \text{ und } wt = wp + \theta$$

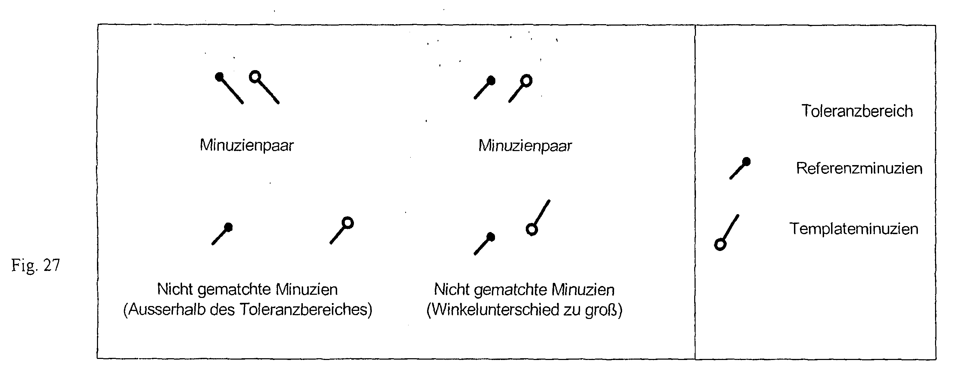

c) Überprüfung der transformierten Minuzien mit den Referenzminuzien. Dabei wird jede transformierte Minuzie mit allen Referenzminuzien verglichen. Wenn die Ortsdifferenz und Winkeldifferenz zwischen der transformierten Minuzie und der Referenzminuzie innerhalb eines Toleranzbereiches liegt (Fig. 27), werden beide als ein korrespondierendes Paar betrachtet und die Anzahl der ermittelten korrespondierenden Minuzien (Matchingscore) wird um eins erhöht ($\Delta x_{max}=\Delta y_{max}=2 \times$Linienabstand, $\Delta w_{max}=30°$);

$$\Delta x = |x^t - x^q| \quad \Delta y = |y^t - y^q| \quad \Delta w = |w^t - w^q|$$

$$\text{IF} \Delta x < x_{max} \wedge \Delta y < \Delta y_{max} \wedge \Delta w < \Delta w_{max}$$

THEN
$(x^t, y^t, w^t)$ und $((x^q, y^q, w^q)$ ist ein Paar unter der Transformation $(t_x, t_y, \theta)$

Score=Score+1
END

d) Vergleich des Matchingscore mit einem Schwellenwert. Der Schwellenwert ist definiert als:

$$T=\min(m,n) \times 0{,}4,$$

$$\text{Threshold}= \begin{cases} 12 & T<12 \\ 20 & T>20 \\ T & \text{sonst} \end{cases}$$

wobei m die Anzahl der Minuzien des Eingabesatzes und n die Anzahl der Minuzien des Referenzsatzes ist.

Der Schwellenwert wird je nach der minimalen Minuzienanzahl der beiden zu vergleichenden Fingerabdrücke variiert. Da die durchschnittliche Minuzienanzahl in einem aufgenommenen Fingerabdruck bei etwa 40 liegt, kommt mit der Gewichtung 0,4 ein durchschnittlicher Schwellenwert von 16 zustande. Die Zuverlässigkeit des Fingerabdruckerkennungssystems hat eine starke Abhängigkeit von der gewählten Gewichtung, die je nach Anwendung verschieden sein kann. Für extrem sicherheitsrelevante Anwendungen kann eine Gewichtung 0,5 eingestellt werden. Für eine gewöhnliche Zutrittskontrolle genügt eine Gewichtung von 0,3.

Es soll noch erwähnt werden, daß der Schwellenwert auf den Bereich von 12 bis 20 beschränkt ist. Die Gründe hierfür sind einfach: es gibt Fingerabdrücke (zum Beispiel derjenige des kleinen Fingers), die verhältnismäßig wenig Minuzien haben (etwa 25). Ohne die Beschränkung kann der Schwellenwert dann unter 10 liegen. Dieser Schwellenwert ist für ein Fingerabdruckerkennungssystem jedoch in der Regel zu niedrig. Andererseits soll der Schwellenwert aber auch nicht derart hoch sein, daß zu viele Vergleiche scheitern.

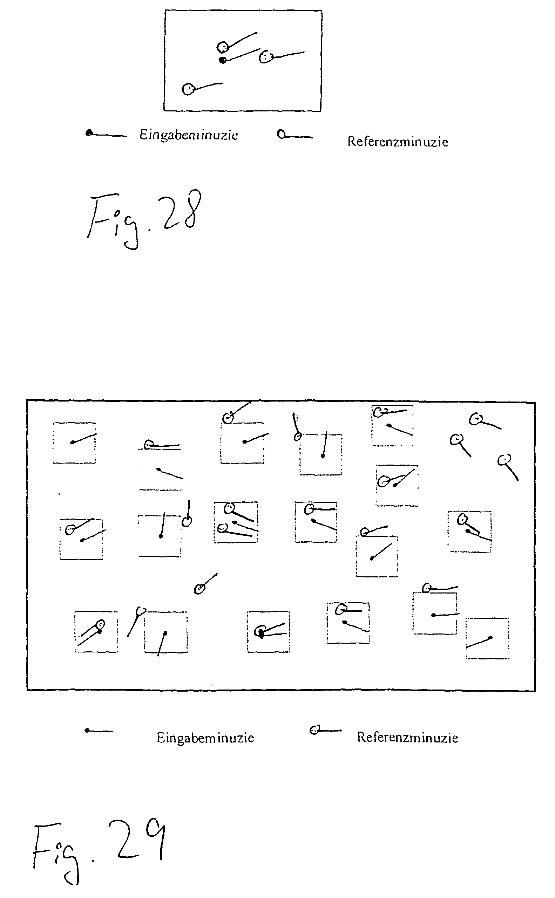

Wenn der Matchingscore über dem Schwellenwert liegt, werden die korrespondierenden Minuzien nochmals genauer geprüft. Die Prüfung ist aus folgenden Überlegungen notwendig: Wenn mehrere Referenzminuzien innerhalb eines Toleranzbereiches liegen, hat die Eingabeminuzie mit mehreren Minuzien ein Paar gebildet. Die Anzahl der korrespondierenden Minuzien wird also mehrfach gezählt (Fig. 28). In diesem Fall wird die Matchingscore entsprechend korrigiert.

Wenn die korrigierte Anzahl der korrespondierenden Minuzien immer noch über dem Schwellenwert liegt, wird der Vergleichsvorgang als erfolgreich beendet. Wenn die Anzahl zwar den Schwellenwert nicht erreicht, sie aber trotzdem gut ist, geht es weiter mit Phase 3. Andernfalls werden weitere Transformationen aus der Kandidatenliste genommen (zurück zur Phase 2).

### 4.3 Phase 3: Korrektur der Transformationsparameter mittels Varianzanalyse

Die Notwendigkeit für die Korrektur der Transformationsparameter ist folgendermaßen begründet:

a) In Phase 1 und in Phase 2 wird der Skalierungsfaktor auf 1,0 festgelegt. Aufgrund des Effekts der lokalen Verzerrung kann der Skalierungsfaktor jedoch durchaus von 1,0 verschieden sein. Daher ist es wichtig, diesen Faktor genauer zu bestimmen.

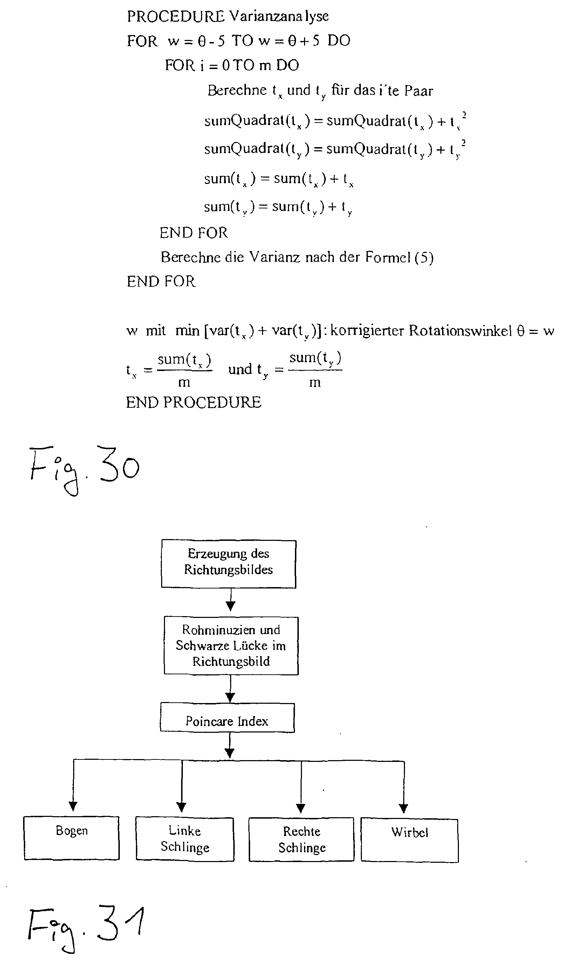

b) In Phase 1 werden die Transformationsparameter gruppiert (Gruppierungsintervalle: ix=8, iy=8,iw=3) und grob geschätzt. Die Gruppierung beinhaltet gewisse Fehler. Im ungünstigsten Fall kann es so sein, daß viele richtige Paare gerade knapp unterhalb des Toleranzbereichs liegen, weil die Transformation nicht genau genug geschätzt ist (s. Fig. 29: wenn die Translation in der vertikalen Richtung noch größer geschätzt worden wäre, hätten viel mehr korrespondierende Minuzien gefunden werden können).

Phase 3 wird nur dann durchgeführt, wenn in Phase 2 die Anzahl der gefundenen korrespondierenden Minuzien knapp unter dem Schwellenwert liegt. Bei der Korrektur werden dann die schon als korrespondierend erkannten Minuzienpaar als Vorlage benutzt (Es wird vorausgesetzt, daß sie die richtige Paare sind). In Fig. 29 sieht man deutlich, daß auch die als korrespondierend erkannten Minuzien mehr nach oben transformiert werden sollten.

Die Korrektur ist in drei Schritten organisiert:

a) Korrektur des-Skalierungsfaktors: Verbinden aller gepaarter Minuzien jeweils im Eingabesatz und im Referenzsatz. Die Länge der verbundenen Linien werden summiert,

$$\text{sum(L)} = \int_{i=0,}^{m} \int_{j=i+1}^{m} L_{V(i,j)}$$

wobei m die Anzahl gepaarter Minuzien und V(i,j) eine Linie der Länge $L_{v(i,j)}$ ist, die zwei Minuzien i und j verbindet. Nachdem die Summe in den beiden Sätzen getrennt berechnet wurde, kann der Skalierungsfaktor korrigiert werden.

$$s = \frac{sum(L_{Re\,ferenzsatz})}{sum(L_{Eingabesatz})}$$

b) Korrektur des Rotationswinkels: Die oben erläuterten verbundenen Linien werden als Vektoren betrachtet und die Steigungen (Winkel) der Vektoren werden summiert:

$$\text{sum}(\theta) = \int_{i=0,}^{m} \int_{j=i+1}^{m} \theta_{V(i,j)}$$

wobei $\theta_{v(i,j)}$ die Steigung des Vektors V (i,j) ist. Die Summe wird ebenfalls getrennt für die beiden Minuziensätze berechnet. Der korrigierte Rotationswinkel ist dann:

$$\theta = \frac{sum(\theta_{Re\,ferenz}) - sum(\theta_{Eingabe})}{m}$$

c) Korrektur der Translation: Wenn s, $\theta$ und die gepaarten Minuzien bekannt sind, kann man mit einer inversen affinen Transformation $t_x$ und $t_y$ berechnen:

$$\begin{pmatrix} t_x \\ t_y \end{pmatrix} = \begin{pmatrix} x^j \\ y^j \end{pmatrix} - s \times \begin{pmatrix} \cos\theta & \sin\theta \\ -\sin\theta & \cos\theta \end{pmatrix} \begin{pmatrix} x^i \\ y^i \end{pmatrix} (i=1,2...m \wedge j=1,2..m)$$

Die einfachste Möglichkeit ist, man summiert jeweils alle $t_x$ und $t_y$ und nimmt den Mittelwert als die korrigierte Translation. Es gibt aber eine bessere Variante: für jedes Minuzienpaar wird mit der oben genannten Formel eine theoretische Translation berechnet, die aber bei jedem Paar verschieden ist. Da alle Minuzien in einem Muster die gleiche Translation besitzen sollen, soll ein Rotationswinkel existieren derart, daß mit dem Rotationswinkel die Unterschiede der Translationen minimal sind. Die Optimierung ist durch Varianzanalyse realisiert:

$$var(t) = \frac{1}{m} \sum_{i=0}^{'m} t - t^{-2}$$

Mathematisch kann man die Prozedur der Varianzanalyse wie in Fig. 29 gezeigt formulieren.
Durch diese Optimierung wird die geeignete Transformation unter Ausnutzung der schon korrespondierenden Paare geschätzt und die korrigierten Parameter werden nochmals in dem Matchingprozeß eingesetzt, um weitere korrespondierende Paare zu finden. Dies geschieht ähnlich wie in Phase 2 (nur geringfügig geändert aufgrund des zusätzlich berücksichtigten Skalierungsfaktors).

### 4. Ergebnisse

Das implementierte Verfahren wurde mit zwei Sätzen von Fingerabdrücken getestet. Der erste Testsatz hat 400 und der zweite 3,000 Fingerabdrücke. Die Testsätze sind folgendermaßen zustande gekommen: Für jeden Finger wurden 10 Aufnahmen mit verschiedener Transformation (Rotation und Translation und beschränkt angefertigt. Der erste Testsatz umfaßt 40 Finger, der zweite 300 Finger. Die Testsätze sind aus den folgenden Gründen repräsentativ:

a) Daumenabdruck, Zeigefinger, Mittelfinger, Ringfinger und kleiner Finger sind in den Testsätze gleichmäßig verteilt (der klein Finger hat relativ wenige Minuzien).
b) Verschiedene Altersgruppen: Fingerabdrücke jüngerer Menschen haben feine Linienabstände, Fingerabdrücke älterer Menschen haben mehr Falten.
c) Beide Geschlechter sind vertreten.
d) Verschiedene Nationalitäten: Europäer (2,600), Asiaten (300), Perser (200), Afrikaner (100) und Lateinamerikaner (200) (die in der Klammer angegebene Anzahl ist die Anzahl der Fingerabdrücke). Bei jeder Volksgruppe ist ein bestimmter Mustertyp dominant, z.B. haben Asiaten mehr Wirbelmuster, Europäer dagegen mehr Bogenmuster.
e) Verschiedene Berufsgruppen: Arbeiter, Angestellte und Handwerker.
f) Verschiedene Gewohnheiten: Raucher und Nichtraucher. Die Veränderung (Störungen der Papillarlinien) eines Fingerabdrucks durch starkes Rauchen ist offensichtlich.
g) Die Qualitäten der Fingerabdrücke sind sehr verschieden: Falten, Narben, Hautschweißporen, leichte bis starke Störungen bzw. Verzerrungen, verschmierte (feuchte) und zerbrochene (trockene) Linien sind mehr oder wenig vorhanden.

Jeder Finger aus einem Testsatz wird mit den restlichen Fingerabdrücken verglichen. Zwei weitere Bedingungen werden vorausgesetzt: (1) wenn die Anzahl der Minuzien eines Fingerabdrucks geringer als 15 ist, ist dieser Fingerabdruck nicht am Vergleichsprozeß beteiligt. (2) wenn die Anzahl verwertbarer Papillarlinien eines Fingerabdrucks weniger als die Hälfte ihrer Gesamtanzahl beträgt, wird dieser Fingerabdruck nicht genommen.
Die Zuverlässigkeit eines Erkennnungssystems kann man mit zwei statistischen Werten beschreiben: der falschen Rückweisungsrate (FRR) und der falschen Akzeptanzrate (FAR).
Falsche Rückweisung: zwei Fingerabdrücke des gleichen Fingers werden vom System als von unterschiedlichen Fingern deklariert.
Falsche Akzeptanz: zwei Fingerabdrücke unterschiedlicher Finger werden vom System als von einem gleichen Finger akzeptiert.
FRR: das Verhältnis der fälschlicherweise zurückgewiesenen Fingerabdruckanzahl zur gesamten Vergleichszahl der gleichen Fingerabdrücke. Die Benutzerfreundlichkeit eines Systems ist von der FRR abhängig. Eine FRR unter 1,00% wird normalerweise von einem Erkennungssystem erwartet.
FAR: das Verhältnis der fälschlicherweise akzeptierten Fingerabdruckanzahl zur gesamten Vergleichsanzahl der unterschiedlichen Fingerabdrücke. Für die Zuverlässigkeit eines Erkennnungssystems ist die FAR entscheidend. Der theoretische Wert der FAR eines Fingerabdruckerkennungssystems liegt bei 0,0001% (unter 1 Million Finger gibt zwei identische).
Die FAR und FRR des implementierten Systems werden mittels der beiden Festsätze untersucht. Für die beiden Testsätze ergibt sich folgende Statistik (Gewichtung = 0,4):

| Test Nr. | Vergleichsanzahl unterschiedlicher Fingerabdrücke | Anzahl der fälschlicherweise akzeptierten Fingerabdrücke | FAR |
|---|---|---|---|
| 1 | 21,279 | 0 | 0,0000% |
| 2 | 1,931.550 | 192 | 0,00994% |

| Test Nr. | Vergleichsanzahl unterschiedliche Fingerabdrücke | Anzahl der fälschlicherweise zurückgewiesenen Fingerabdrücke | FRR |
|---|---|---|---|
| 1 | 876 | 4 | 0,46% |
| 2 | 11.686 | 199 | 1,70% |

Die durchschnittliche Rechenzeit für einen Vergleich liegt bei etwa 8 ms.
Nachfolgend werden die Rechenzeiten der jeweilige Arbeitsschritt des Erkennungssystems zusammengefaßt (Pentium PC 200 MHz)

| Arbeitsschritt | Bildaufbereitung | Minuzienextraktion | sonstiges | gesamt |
|---|---|---|---|---|
| Rechenzeit | 300 ms | 100 ms | 50 ms | 450 ms |

| Module | Fingerabdruckregistrierung (Kodiereinheit) | Fingerabdruckvergleich (Vergleichseinheit) |
|---|---|---|
| Rechenzeit | 450 ms | 8 ms |

Es läßt sich folgendes festhalten:

a) Das implementierte Erkennungssystem hat eine sehr hohe Zuverlässigkeit. Die niedrige FAR und FRR haben nicht nur die Zuverlässigkeit des Vergleichsverfahrens, sondern auch die Sorgfalt der Bildaufbereitung und der Minuzienextraktion bewiesen. Die im Test erzielte FAR und FRR haben auch bestätigt, daß das System für breite Aufwendungen einsetzbar ist.

b) Das Vergleichsverfahren hat die Transformation sehr effektiv behandelt. Die Beschränkung der Rotation und der Translation ist großzügig. Theoretisch kann das Verfahren beliebige Transformationen korrekt abschätzen, aber für die normale Anwendung reicht die vorgenommene Beschränkung aus.

c) Die Schnelligkeit des Vergleichsverfahrens macht das System nicht nur für Verifikationsanwendungen, sondern auch für Identifikationsanwendungen interessant. Für den Zutrittskontrolle bei einem mittleren Betrieb mit etwa 100 Angestellten benötigt das System zum Beispiel nur ca. eine Sekunde, um eine Person zu identifizieren.

d) Die weitere Entwicklung soll dazu beitragen, die FAR zu reduzieren. Eine Möglichkeit besteht drin, die Eindeutigkeit eines Vergleiches zu prüfen. Die falsche Akzeptanz ist meistens dadurch verursacht, daß zwei Fingerabdruckmuster eine sehr unterschiedliche Anzahl von Minuzien haben. Zur Zeit wird nur die Anzahl der gefundenen korrespondierenden Paare mit einem Schwellenwert T verglichen. Bei den restlichen Minuzien (m - T, n - T) ist völlig unklar, warum sie nicht gepaart sind. Es muß daher geprüft werden, ob solche Minuzien im anderen Muster nicht vorhanden (vermißt) sind oder nur wegen der lokalen Verzerrungen knapp außerhalb des Toleranzbereichs liegen. Ein Maß für die Eindeutigkeit sollte dafür definiert werden.

## 5. Klassifikation

Die Klassifikation ist eine wichtige Voraussetzung für die schnelle Identifizierung eines Fingerabdruckes in einer großen Fingerabdruckdatenbank. Bei der Klassifikation wird ein Fingerabdruck einer vordefinierten Klasse zugeordnet. Wenn alle Fingerabdrücke innerhalb einem Datenbank a-priori klassifiziert sind, kann die Identifizierung viel effizienter geschehen, weil der eingegebene Fingerabdruck dann nur in einer entsprechenden Klasse gesucht werden soll.

Die Anforderungen an die Fingerabdruckklassifikation sind jedoch sehr hoch: ein gutes Klassifikationssystem soll sehr zuverlässig sein (falsche Klassifikationen sollen möglichst vermieden werden) und es soll gleichzeitig auch selektiv sein, so daß die Fingerabdrücke innerhalb einer Datenbanken etwa gleich in nichtüberlappenden Klassen verteilt werden können. Außerdem soll der Suchvorgang effizient sein (ein Fingerabdruck soll schnell wie möglich gefunden werden).

Den ersten Versuch, Fingerabdrücke zu klassifizieren, hat Francis Galton (1822-1916) gemacht. Er definierte drei Hauptgruppen von Fingerabdrücken. Edward Henry (1850-1931) hat Galton's Klassifikationssystem erweitert und in vier Hauptgruppen modifiziert (Fig. 5). Wegen seiner Effizienz ist das Henry Klassifikationssystem sehr verbreitet und entsprechend standardisiert.

## 5.1. Grundbegriffe zur Klassifikation

Je nach Anzahl und Lage der globalen Merkmale (Delten und Kerne) kann ein Fingerabdruck nach dem Henry-System klassifiziert werden. Delten sind Stellen einer Musterfläche, wo die Linien eine dreieckige Struktur bilden.Kerne sind Stellen des Krümmungsmaximums der Linien, wobei die Krümmung einen bestimmten Schwellenwert überschreitet.

Die vier Hauptgruppen des Henry-Klassifikationsystms basieren auf dem Vorhandensein bzw. dem Fehlen bestimmter globaler Merkmale innerhalb einer Musterfläche:

a) Bögen: Bögen besitzen weder Kern noch Delta in der Musterfläche. Der Linienverlauf eines Bogens sieht folgendermaßen aus: die Linien laufen zu einer Seite ein, wachsen in der Mitte an und verlassen die Musterfläche zur anderen Seite. Mit der Steigung der typischen Linienstruktur kann man Bogenmuster noch feiner klassifizieren. Wenn die Steigung groß genug ist, wird das Muster auch "Tanne" genannt.
b) Schlingen: Schlingen besitzen genau einen Kern und genau ein Delta.
c) Wirbel: Wirbel haben mindestens zwei Delten.
d) Zusammengesetzte Strukturen

Das Vorhandensein globaler Merkmale innerhalb einer Musterfläche läßt sich mit Hilfe des Poincare-Index bestimmen. Zur Ermittlung des Poincare-Index wird um einen Punkt in der Musterfläche ein Kreis gebildet. Die Richtungsänderungen auf dem Kreis werden aufsummiert. Der Punkt wird nach der Summe klassifiziert. Ein Punkt wird als gewöhnlich bezeichnet, wenn die Summe der Richtungsänderung 0° ist, als Kern, wenn die Summe 180° ist und als Delta, wenn die Summe -180° ist (Fig. 32).

Erfindungsgemäß wird ein auf globalen Merkmalen basierendes Klassifikationsverfahren implementiert. Dabei wird eine robuste Richtung vorausgesetzt. Wie bereits erläutert, basiert die Richtungserzeugung auf dem Konturbild. Durch die Eigenschaften der Konturen und des Zweibeins lassen sich falsche Richtungswerte vermeiden. Die Verallgemeinerung von der Konturenrichtung zur Pixelrichtung erfolgt durch die Annahme der Kontinuität des Linienverlaufs. Es ist sehr interessant zu sehen, daß gerade in den Bereichen, wo sich Kern oder Delta befinden, keine Pixelrichtung zugeordnet werden können (Schwarze Lücken im Richtungsbild), weil in diesen Bereichen große Richtungsveränderungen stattfinden. Diese Eigenschaft wird von dem implementierten Verfahren benutzt. Ferner beobachtet man, daß in der Umgebung von globalen Merkmalen viele Rohminuzien existieren.

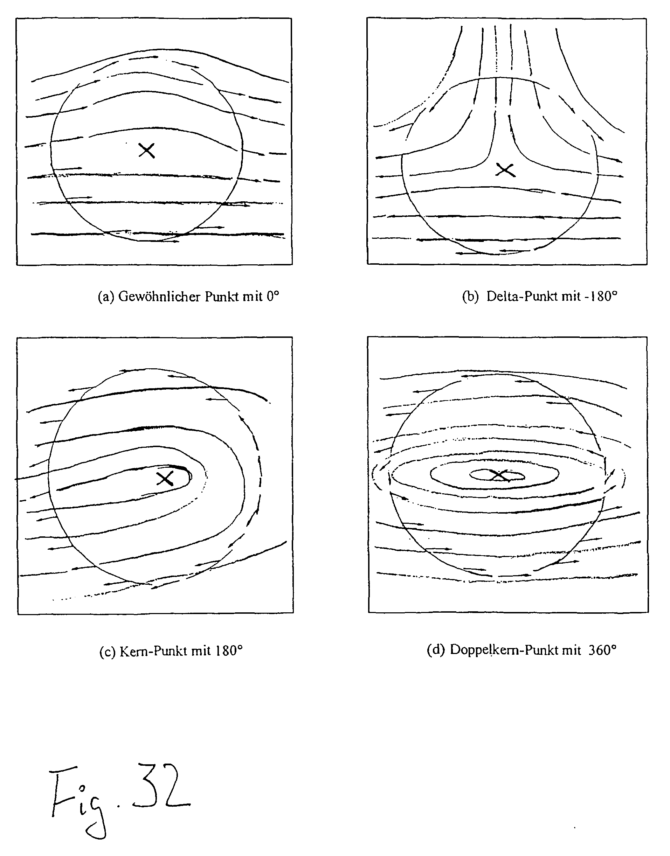

Das implementierte Klassifikationsverfahren ist nach diesen beiden Besonderheiten organisiert. Die einzelnen Arbeitsschritten sind (Fig. 31):

a) Die Rohminuzien werden in einer Kandidatenliste gespeichert.
b) Wenn innerhalb einer kleinen Umgebung (16x16) der Rohminuzie keine genügende Richtungsformation vorhanden ist, wird diese Stelle genauer analysiert. Um diese Stelle wird ein Kreis im Richtungsbild konstruiert und wenn der Poincare-Index die oben genannte Bedingungen für Kern oder Delta erfüllt, wird diese Stelle als mögliches globales Merkmal in einer Liste gespeichert.
c) Nachdem alle möglichen Stellen globaler Merkmale untersucht worden sind, werden benachbarte globale Merkmale zu einem einzigen globalen Merkmal zusammengefaßt. Dies geschieht durch ein Clustering-Verfahren, wobei der Schwerpunkt des Clusters als globales Merkmal betrachtet wird.
d) Klassifikation eines Finerabdrucks anhand der gefundenen globalen Merkmale nach einem modifizierten Henry-Klassifikationssystem. Vier Klassen werden verwendet, nämlich Bogen, linke Schlinge, rechte Schlinge und.

Das implementierte Klassifikationsverfahren unterscheidet sich von Verfahren des Stands der Technik in zwei wesentlichen Punkten:

a) Erzeugung eines Richtungsbildes: Die Richtungserzeugung basiert auf Konturen, und ist daher robust und schnell.
b) Wegen der Besonderheit des Richtungsbildes und der Rohminuzien sind nur begrenzte Punkte zu analysieren. Daher ist das implementierte Verfahren sehr schnell. Für eine Bildgröße von 512x512 bedeutet das einen Beschleunigungsfaktor von etwa 1000. Weil die Richtungserzeugung und die Extraktion der Rohminuzien die Nebenprodukte der Bildaufbereitung und der Minuzienextraktion sind, beträgt die Rechenzeit für die Klassifikation lediglich etwa 20 ms (Pentium PC 200 MHz).

Zur Verbesserung des vorstehend beschriebenen, auf globalen Merkmalen beruhenden Klassifikationsverfahrens kann zusätzlich zur Analyse der globalen Merkmale eine Analyse der Typ-Linien erfolgen. Typ-Linien sind die innersten Linienkonfigurationen einer Musterfläche.

Bei auf der Linienstruktur basierenden Verfahren wird zum ersten die Linienstruktur kodiert und dann die grobe Gestalt der Musterfläche analysiert. Das Verfahren hat den Vorteil, daß es die globalen Informationen über den Linienverlauf benutzt. Im Vergleich zu den anderen Verfahren ist es nicht empfindlich gegenüber fehlenden globalen Merkmalen. Der Nachteil ist jedoch, daß Rotation und Translation sehr schwer behandelt werden können.

Gemäß einer ersten Implementierung wird die Linienstruktur eines Fingerabdrucks als ein Richtungsbild definiert (vier Richtungen werden verwendet). Das Richtungsbild wird in Parkettzellen zerlegt und der typische grobe Linienverlauf wird extrahiert (die Typ-Linien). Die Klassifikation erfolgt durch die syntaktische Analyse der Typ-Linien.

Gemäß einer zweiten Implementierung werden bei der syntaktischen Analyse die Verläufe der Typ-Linien in eine Symbolliste umgewandelt und bei der Klassifikation wird dann ein String-Matching-Verfahren angewendet.

Gemäß einer dritten Implementierung werden Linien als B-Spline dargestellt. Der B-Spline hat den Vorteil, daß die Linienstruktur mathematisch analysiert werden kann. Die Extraktion der Typ- Linien ist durch die Gruppierung von parallel laufenden Linien realisiert.

**Patentansprüche**

1. Verfahren zur computergestützten Ermittlung der lokalen Merkmale einer linienhaften Textur, insbesondere eines Fingerabdrucks, enthaltend

    i) Definieren von Merkmalskriterien;
    ii) Bereitstellen eines gerasterten Konturbildes der linienhaften Textur;
    iii) Analysieren des Konturenverlaufs der linienhaften Textur innerhalb des Konturbilds im Hinblick auf die Merkmalskriterien zur Ermittlung der lokalen Merkmale, wobei das Analysieren des Konturenverlaufs mittels eines entlang der Kontur geführten Zweibeins erfolgt und gemäß einem ersten Merkmalskriterium der Winkel des Zweibeins kleiner als ein vorbestimmter erster Schwellenwert ist oder innerhalb eines vorbestimmten Winkelintervalls liegt.

2. Verfahren nach Anspruch 1, wobei zur Ermittlung der lokalen Merkmale die lokale Krümmung der Kontur der linienhaften Textur analysiert wird.

3. Verfahren nach einem der Ansprüche 1 oder 2, wobei zumindest Linienenden und Linienverzweigungen als lokale Merkmale identifiziert werden.

4. Verfahren nach einem der Ansprüche 1 bis 3, wobei gemäß einem zweiten Merkmalskriterium der Längenunterschied zwischen zwei Beinen des Zweibeins kleiner als ein vorbestimmter zweiter Schwellenwert ist, und gemäß einem dritten Merkmalskriterium der Längenunterschied zwischen einem der Beine des Zweibeins und der Länge der Kontur zwischen einem Anfangspunkt und einem Endpunkt dieses Beines auf der Kontur kleiner als ein vorbestimmte dritter Schwellenwert ist, wobei von jedem ermittelten lokalen Merkmale Koordinaten und ein relativer Winkel bestimmt werden, wobei der Winkel mittels der Senkrechten zur Tangentenrichtung der Kontur an der Stelle des lokalen Merkmals bestimmt wird oder durch Mittelung von Tangentenrichtungen in der Umgebung des lokalen Merkmals bestimmt wird.

5. Verfahren nach Anspruch 4, wobei die ermittelten lokalen Merkmale einer weiteren Analyse unterzogen werden, die eine Beurteilung der Lage der ermittelten lokalen Merkmale und des Abstandes zwischen den ermittelten lokalen Merkmalen umfaßt, wobei alle ermittelten lokalen Merkmale, deren gegenseitiger Abstand geringer als ein vorbestimmter vierter Schwellenwert ist, nicht als lokale Merkmale identifiziert werden.

6. Verfahren nach Anspruch 5, wobei alle lokalen Merkmale, deren gegenseitiger Abstand größer als der vierte Schwellenwert, aber geringer als ein vorbestimmter fünfter Schwellenwert ist, zu einem einzigen lokalen Merkmal zusammengefaßt werden, wobei , wenn um ein lokales Merkmal die Anzahl der benachbarten lokalen Merkmale geringer als ein vorbestimmter sechster Schwellenwert ist, das betreffende lokale Merkmal und die benachbarten lokalen Merkmale nicht als lokale Merkmale identifiziert werden.

7. Verfahren nach Anspruch 6, wobei ein Gütebild bereitgestellt wird und alle lokalen Merkmale, die nicht innerhalb der Schnittmenge des Gütebilds und des Konturbilds liegen, nicht als lokale Merkmale identifiziert werden.

8. Verfahren nach Anspruch 7, wobei das Gütebild gemäß einem der vorhergehenden Ansprüche generiert wird, und, wobei das Konturbild gemäß einem der vorhergehenden Ansprüche generiert wird.

9. Verfahren zum computergestützten Vergleichen der lokalen Merkmale von linienhaften Texturen, insbesondere von Fingerabdrücken, bei dem zur Ermittlung korrespondierender lokaler Merkmale nach einem der Ansprüche 1-8 ein erster Satz lokaler Merkmale mit mindestens einem zweiten Satz lokaler Merkmale verglichen wird, enthaltend

    a) automatisches Bestimmen mindestens eines geschätzten Satzes Transformationsparameter für eine Transformation zwischen dem einen Satz lokaler Merkmale und dem anderen Satz lokaler Merkmale;
    b) Anwenden der Transformation auf der Grundlage des geschätzten Satzes Transformationsparameter auf die lokalen Merkmale des ersten Satzes lokaler Merkmale oder des zweiten Satzes lokaler Merkmale und Ermittlung korrespondierender lokaler Merkmale; und
    c) automatisches Analysieren der in Schritt b) ermittelten korrespondierenden lokalen Merkmale, wobei in Abhängigkeit von der Analyse eine iterative Korrektur des geschätzten Satzes Transformationsparameter derart erfolgt, daß Schritt b) mit dem korrigierten Satz Transformationsparameter durchgeführt wird, indem wenn die in Schritt b) ermittelten, korrespondierenden lokalen Merkmale ein erstes Gütekriterium zwar nicht erfüllen, aber

24

ein zweites Gütekriterium erfüllen, das geringer als das erste Gütekriterium ist, wobei die beiden Sätze lokaler Merkmale automatisch als nicht übereinstimmend bewertet werden, wenn weder das erste, noch das zweite Gütekriterium erfüllt ist, und wobei die beiden Sätze lokaler Merkmale automatisch als übereinstimmend bewertet werden, wenn das erste Gütekriterium erfüllt ist.

10. Verfahren nach Anspruch 9, wobei bei der iterativen Korrektur des geschätzten Satzes Transformationsparameter die in Schritt b) ermittelten korrespondierenden lokalen Merkmale als Ausgangspunkt dienen, wobei die iterative Korrektur den Schritt des Optimierens einer Kostenfunktion umfaßt oder eine Korrektur von zumindest einem der Transformationsparameter Skalierungsfaktor, Rotationswinkel und Translationsvektor beinhaltet, wobei zur Korrektur des Translationsvektors eine Varianzanalyse durchgeführt wird.

11. Verfahren nach einem der Ansprüche 9 oder 10, wobei die iterative Korrektur nicht durchgeführt wird, wenn die beiden Sätze lokaler Merkmale als übereinstimmend oder als nicht übereinstimmend bewertet wurden, wobei das erste Gütekriterium dann erfüllt wird, wenn die Anzahl korrespondierender lokaler Merkmale über einem vorbestimmten, ersten Schwellenwert liegt, und wobei das zweite Gütekriterium dann erfüllt wird, wenn die Anzahl der korrespondierenden lokalen Merkmale unter dem ersten Schwellenwert, aber über einem vorbestimmten, zweiten Schwellenwert liegt.

12. Verfahren nach Anspruch 11, wobei die Transformationsparameter im Hough-Raum geschätzt werden, wobei in Schritt a) das Bestimmen des geschätzten Satzes Transformationsparameter auf der Grundlage vorausgewählter Sätze Transformationsparameter erfolgt, und wobei alle diejenigen Sätze Transformationsparameter vorausgewählt werden, welche ein beliebiges lokale Merkmal des einen Satzes lokaler Merkmale auf ein beliebiges lokales Merkmal des zweiten Satzes lokales Merkmal abbilden, wobei die im Rahmen des Bestimmens eines geschätzten Satzes Transformationsparameter berechneten Transformationsparameterwerte quantisiert werden, wobei ein Transformationsparameterraum vorhanden ist, welcher einen Zähler für jeden quantisierten Transformationsparameterwert umfaßt, wobei für jeden berechneten Transformationsparameterwert der entsprechende Zähler erhöht wird.

13. Verfahren nach einem der Ansprüche 9 - 12, wobei in Schritt a) derjenige Satz Transformationsparameter als geschätzter Satz Transformationsparameter herangezogen wird, welcher ein viertes Gütekriterium am besten erfüllt, wobei in Schritt a) diejenigen Sätze Transformationsparameter als geschätzte Sätze Transformationsparameter herangezogen werden, welche ein fünftes Gütekriterium erfüllen, wobei die beiden Sätze lokaler Merkmale automatisch als nicht übereinstimmend bewertet werden, wenn in Schritt a) kein Satz Transformationsparameter gefunden wird, der das vierte oder das fünfte Gütekriterium erfüllt, oder wobei in Schritt c) ein lokales Merkmal des einen Satzes lokaler Merkmale und ein lokales Merkmal des anderen Satzes lokaler Merkmale als korrespondierend beurteilt werden, wenn der Abstand zwischen einem transformierten lokalen Merkmal des einen Satzes lokaler Merkmale und einem nicht transformierten lokalen Merkmal des anderen Satzes lokaler Merkmale ein sechstes Gütekriterium erfüllt.

14. Computerprogrammprodukt umfassend einen Programmcode zur Durchführung des Verfahrens nach einem der Ansprüche 1 bis 13.

**Claims**

1. Method for the computer-assisted identification of the local characteristics of a line-type texture, in particular a fingerprint, said method comprising

   i) defining of criteria;
   ii) providing a rasterised contour image of the line-type texture;
   iii) analyzing the course of contour of the line-type texture within the contour image with a view to the criteria for identifying the local characteristics, analyzing of the course of contour being carried out by means of a bipod guided along the contour and according to a first criterion the angle of the bipod being smaller than a preset first threshold value or being within a preset angle interval.

2. Method according to claim 1, wherein the local curvature of the contour of the line-type texture is analyzed for identifying the local characteristics.

3. Method according to either claim 1 or 2, wherein at least line ends and line branchings are identified as local characteristics.

4. Method according to one of claims 1 to 3, wherein according to a second criterion the difference in length between two legs of the bipod is smaller than a preset second threshold value, and according to a third criterion the difference in length between one of the legs of the bipod and the length of the contour between a starting point and an end point of said leg on the contour is smaller than a preset third threshold value, wherein coordinates and a relative angle of each identified local characteristic are determined, the angle being determined by means of the vertical to the tangential direction of the contour at the point of the local characteristic or by taking the mean of tangent directions in the vicinity of the local characteristic.

5. Method according to claim 4, wherein the identified local characteristics are subjected to a further analysis which comprises an evaluation of the position of the identified local characteristics and of the spacing between the identified local characteristics, wherein all identified local characteristics, whose mutual spacing is smaller than a preset fourth threshold value, are not identified as local characteristics.

6. Method according to claim 5, wherein all local characteristics, whose mutual spacing is greater than the fourth threshold value but smaller than a preset fifth threshold value, are combined to a single local characteristic, wherein, if the number of the adjacent local characteristics is lower than a preset sixth threshold value by a local characteristic, the respective local characteristic and the adjacent local characteristics are not identified as local characteristics.

7. Method according to claim 6, wherein a quality image is provided and all local characteristics which are not covered by the intersection of the quality image and the contour image, are not identified as local characteristics.

8. Method according to claim 7, wherein the quality image is generated according to one of the preceding claims and wherein the contour image is generated according to one of the preceding claims.

9. Method for the computer-assisted comparing of the local characteristics of line-type textures, in particular of fingerprints, in which for identifying corresponding local characteristics according to one of claims 1 to 8 a first set of local characteristics is compared to at least one second set of local characteristics, said method comprising

    a) automatically determining at least one estimated set of transformation parameters for a transformation between the one set of local characteristics and the other set of local characteristics;
    b) applying the transformation on the basis of the estimated set of transformation parameters to the local characteristics of the first set of local characteristics or the second set of local characteristics and identifying corresponding local characteristics; and
    c) automatically analyzing the corresponding local characteristics identified in step b), wherein in response to the analysis an iterative correction of the estimated set of transformation parameters takes place such that step b) is carried out with the corrected set of transformation parameters, wherein the corresponding local characteristics identified in step b) do not fulfil a first quality criterion but fulfil a second quality criterion lower than the first quality criterion, wherein the two sets of local characteristics are automatically evaluated as being not coincident if neither the first nor the second quality criterion is fulfilled, and wherein the two sets of local characteristics are automatically evaluated as coincident if the first quality criterion is fulfilled.

10. Method according to claim 9, wherein in the iterative correction of the estimated set of transformation parameters the corresponding local characteristics identified in step b) serve as starting point, with the iterative correction comprising the step of optimizing a cost function or a correction of at least one of the transformation parameters scaling factor, angle of rotation and translation vector, a variance analysis being carried out for correcting the translation vector.

11. Method according to one of claims 9 or 10, wherein the iterative correction is not carried out if the two sets of local characteristics were evaluated as coincident or as not coincident, the first quality criterion being fulfilled if the number of corresponding local characteristics is above a preset first threshold value, and the second quality criterion being fulfilled if the number of the corresponding local characteristics is below the first threshold value but above a preset second threshold value.

12. Method according to claim 11, wherein the transformation parameters are estimated in the Hough-room, wherein in step a) determination of the estimated set of transformation parameters takes place on the basis of pre-selected sets of transformation parameters and wherein all those sets of transformation parameters are pre-selected which map any optional local characteristic of the one set of local characteristics on any optional local characteristic of the second set of local characteristics, wherein the transformation parameter values calculated within the scope of the determination of an estimated set of transformation parameters are quantified, wherein a transformation parameter space is present which comprises a counter for each quantified transformation parameter value, the respective counter being increased for each calculated transformation parameter value.

13. Method according to one of claims 9 to 12, wherein in step a) that set of transformation parameters is used as estimated set of transformation parameters which fulfils a fourth quality criterion best, wherein in step a) those sets of transformation parameters are used as estimated sets of transformation parameters which fulfil a fifth quality criterion, wherein the two sets of local characteristics are automatically evaluated as not coincident if in step a) no set of transformation parameters fulfilling the fourth or fifth quality criterion is found or wherein in step c) a local characteristic of the one set of local characteristics and a local characteristic of the other set of local characteristics are evaluated as corresponding, if the spacing between a transformed local characteristic of the one set of local characteristics and a non-transformed local characteristic of the other set of local characteristics fulfils a sixth quality criterion.

14. Computer programme product comprising a programme code for carrying out the method according to one of claims 1 to 13.

**Revendications**

1. Procédé permettant la détermination assistée par ordinateur des caractéristiques locales d'une texture à lignes, notamment d'une empreinte digitale, comprenant

   i) la définition de critères caractéristiques ;
   ii) la mise à disposition d'une image matricielle de contour de la texture à lignes ;
   iii) l'analyse du contour de la texture à lignes à l'intérieur de l'image de contour compte tenu desdits critères caractéristiques pour déterminer les caractéristiques locales, l'analyse du contour étant effectuée à l'aide d'un dièdre guidé le long du contour et l'angle du dièdre étant, conformément à un premier critère caractéristique, inférieur à une première valeur seuil prédéfinie ou situé dans un intervalle angulaire prédéfini.

2. Procédé selon la revendication 1, la courbure locale du contour de la texture à lignes étant analysée pour déterminer les caractéristiques locales.

3. Procédé selon l'une des revendications 1 ou 2, au moins les extrémités et les ramifications des lignes étant identifiées comme caractéristiques locales.

4. Procédé selon l'une des revendications 1 à 3, la différence de longueur entre deux bras du dièdre étant, conformément à un second critère caractéristique, inférieure à une seconde valeur seuil prédéfinie, et la différence de longueur entre un des bras du dièdre et la longueur du contour entre un point de commencement et un point final du bras sur le contour étant inférieure à une troisième valeur seuil prédéfinie, des coordonnées et un angle relatif étant calculés à partir de chaque caractéristique locale déterminée, l'angle étant déterminé à l'aide de la perpendiculaire à la direction tangentielle du contour à l'endroit de la caractéristique locale ou par calcul de la valeur moyenne des directions tangentielles dans l'environnement de la caractéristique locale.

5. Procédé selon la revendication 4, les caractéristiques locales déterminées étant soumises à une analyse supplémentaire laquelle comprend une appréciation de la position des caractéristiques locales déterminées et une appréciation de la distance entre les caractéristiques locales déterminées, toutes les caractéristiques locales déterminées dont l'écart réciproque est inférieur à une quatrième valeur seuil prédéfinie n'étant pas identifiées comme caractéristiques locales.

6. Procédé selon la revendication 5, toutes les caractéristiques locales dont l'écart réciproque est certes supérieur à ladite quatrième valeur seuil mais cependant inférieur à une cinquième valeur seuil prédéfinie étant regroupées en une seule caractéristique locale, ladite caractéristique locale et ses caractéristiques locales voisines n'étant pas identifiées comme caractéristiques locales lorsque le nombre des caractéristiques locales voisines situées autour de la caractéristique locale concernée est inférieur à une sixième valeur seuil prédéfinie.

7. Procédé selon la revendication 6, une image de qualité étant mise à disposition et toutes les caractéristiques locales non situées dans l'intersection d'ensembles de l'image de qualité et de l'image de contour n'étant pas identifiées comme caractéristiques locales.

8. Procédé selon la revendication 7, l'image de qualité étant générée conformément à l'une des revendications précédentes, et l'image de contour, conformément à l'une des revendications précédentes.

9. Procédé permettant la comparaison assistée par ordinateur des caractéristiques locales de textures à lignes, notamment d'empreintes digitales, dans le cadre duquel un premier jeu de caractéristiques locales est comparé à au moins un second jeu de caractéristiques locales pour déterminer des caractéristiques locales correspondantes selon l'une des revendications 1 à 8, comprenant

a) la détermination automatique d'au moins un jeu de paramètres de transformation estimés pour une transformation entre l'un et l'autre jeu de caractéristiques locales ;
b) l'application de la transformation sur la base du jeu de paramètres de transformation estimés aux caractéristiques locales du premier ou du second jeu de caractéristiques locales, et la détermination de caractéristiques locales correspondantes ; et
c) l'analyse automatique des caractéristiques locales correspondantes déterminées à l'étape b), une correction itérative du jeu de paramètres de transformation estimés étant, en fonction de l'analyse, opérée de telle manière que l'étape b) est reconduite avec le jeu de paramètres de transformation corrigés lorsque les caractéristiques locales correspondantes déterminées à l'étape b) ne remplissent pas un premier critère de qualité mais satisfont à un second critère de qualité, lequel est inférieur au premier critère de qualité, les deux jeux de caractéristiques locales étant automatiquement évalués comme non correspondants lorsque ne sont remplis ni le premier ni le second critère de qualité, et les deux jeux de caractéristiques locales étant automatiquement évalués comme correspondants lorsqu'est rempli le premier critère de qualité.

10. Procédé selon la revendication 9, les caractéristiques correspondantes déterminées à l'étape b) servant de point de départ lors de la correction itérative du jeu de paramètres de transformation estimés, la correction itérative comprenant une étape d'optimisation de la fonction de coût ou une correction d'au moins un des paramètres de transformation tels que le facteur d'échelle, l'angle de rotation et le vecteur de translation, la correction du vecteur de translation étant réalisée à l'aide d'une analyse de variance.

11. Procédé selon l'une des revendications 9 ou 10, la correction itérative n'étant pas effectuée lorsque les deux jeux de caractéristiques locales ont été évalués comme correspondants ou comme non correspondants, le premier critère de qualité étant rempli lorsque le nombre de caractéristiques locales correspondantes est supérieur à une première valeur seuil prédéfinie, et le second critère de qualité étant rempli lorsque le nombre des caractéristiques locales correspondantes est certes inférieur à la première valeur seuil mais supérieur à une seconde valeur seuil prédéfinie.

12. Procédé selon la revendication 11, les paramètres de transformation étant estimés dans l'espace de Hough, la détermination du jeu des paramètres de transformation estimés s'opérant à l'étape a) sur la base de jeux de paramètres de transformation présélectionnés et tous les jeux de paramètres de transformation présélectionnés étant ceux reproduisant n'importe quelle caractéristique locale du premier jeu de caractéristiques locales sur n'importe quelle caractéristique locale du second jeu de caractéristiques locales, les valeurs de paramètres de transformation calculées lors de la détermination d'un jeu de paramètres de transformation estimés étant quantifiées, un espace de paramètres de transformation étant existant et intégrant un compteur pour chaque valeur de paramètre de transformation quantifiée, le compteur correspondant augmentant à chaque valeur de paramètre de transformation calculée.

13. Procédé selon l'une des revendications 9 à 12, le jeu de paramètres de transformation utilisé à l'étape a) comme jeu de paramètres de transformation estimés étant le jeu qui remplit au mieux un quatrième critère de qualité, les jeux de paramètres de transformation utilisés à l'étape a) comme jeux de paramètres de transformation estimés étant ceux qui remplissent un cinquième critère de qualité, les deux jeux de caractéristiques locales étant automatiquement évalués comme non correspondants lorsqu'il n'est trouvé à l'étape a) aucun jeu de paramètres de transformation remplissant le quatrième ou le cinquième critère de qualité, ou une caractéristique locale de l'un des jeux de caractéristiques locales et une caractéristique locale de l'autre jeu de caractéristiques locales étant évaluées comme correspondantes à l'étape c) lorsque l'écart entre une caractéristique locale transformée de l'un des jeux de caractéristiques locales et une caractéristique locale non transformée de l'autre jeu de caractéristiques locales remplissent un sixième critère de qualité.

**14.** Programme informatique comprenant un code programme pour la mise en oeuvre du procédé selon l'une des revendications 1 à 13.

Fig. 1

Linienende

Verzweigung

Fig. 2a

Fig. 2b

Fig. 3

1. Linienende
2. Ausweichende Linienenden
3. Linienverästelung
4. Haken
5. Gabelung
6. Punkt
7. Auge
8. Insel
9. Eingelagerte Linie
10. Eingelagerte Schleife
11. Sonderheit

Fig. 4

(a) Bogen

(b) Tanne

(c) Linke Schlinge

(d) Rechte Schlinge

(e) Wirbel

(f) Wirbel mit Doppelschlinge

Fig. 5

Fig. 6

Fig. 7

**Offline Phase**

| Fingerabdruck Sensor | → | Merkmals-extraktion | → | Referenzmuster |

Fingerabdruckbild                    Minuzien

**Online Phase**

| Fingerabdruck Sensor | → | Merkmals-extraktion | → | Merkmalsvergleich | → | Ja/Nein |

Fingerabdruckbild                    Minuzien

Fig. 8

Digitales Bild

Framegrabber

CCD Kamera

Reflektiertes Bild

Homogenes Licht

Prisma

Fig. 9

Fig. 10

Fig. 11

Fig. 12

Ketten – Code :

| Index des Konturpunktes | x – Koordinatenwert | y – Koordinatenwert |
| --- | --- | --- |
| 0 | 2 | 0 |
| 1 | 1 | 1 |
| 2 | 0 | 2 |
| . | . | . |
| . | . | . |
| 13 | 10 | 4 |
| 14 | 9 | 5 |
| 15 | 10 | 6 |

Fig. 13

Fig. 14a

Fig. 14b

Fig. 15b

Fig. 15a

Fig. 16

Fig. 17

Fig. 18a                    Fig. 18b

Fig. 19

Gewichtungen: $P_0 = 0,428$, $P_1 = P_2 = 0,286$

Fig. 20

| Arbeitsschritt | Binärisierung (1) | Kontur-Verfolgen (1) | Erzeugung des Richtungsbildes & des Gütebildes | Anisotrope Glättung | Binärisierung (2) | Kontur-Verfolgen (2) | Summe |
|---|---|---|---|---|---|---|---|
| Rechenzeit (ms) | 35 | 45 | 100 | 40 | 35 | 45 | 300 |

Fig. 21

Fig. 22a

Fig. 22b

Fig. 23

Länge der Liste n=0

Matching.

m > 12 || n=0

Phase 1:Hough-Transformation
Grobe Schätzung der Invarianten
Kandidatenliste

n>0

Phase 2: Affine-Transformation
Testen der Transformations-
Parameter

m>8

Phase 3: Kostenoptimierung
Korrektur der Transformations-
Parameter

Fig. 24

Y

Template Linie

Rotation Δθ

(Δx,Δy)

Input Linie

X

$$\text{FOR } (x^p, y^p, w^p) \in P \text{ DO}$$

$$\text{FOR } (x^q, y^q, w^q) \in Q \text{ DO}$$

$$\alpha = w^p - w^q$$

$$\text{FOR } \gamma \in (\gamma_1, \ldots, \gamma_L) \text{ DO}$$

$$\theta = \alpha + \gamma$$

$$\begin{pmatrix} t_x \\ t_y \end{pmatrix} = \begin{pmatrix} x^q \\ y^q \end{pmatrix} - s \begin{pmatrix} \cos\theta & \sin\theta \\ -\sin\theta & \cos\theta \end{pmatrix} \begin{pmatrix} x^p \\ y^p \end{pmatrix}$$

$$Fig. \ 25$$

PROCEDURE Phase1_Hough

$$A[\theta_1/w \ldots \theta_L/w, \ t_{x1}/x \ldots t_{xM}/x, \ t_{y1}/y \ldots t_{yN}/y] = 0$$

$$\text{FOR } (x^p, y^p, w^p) \in P \text{ DO}$$

$$\text{FOR } (x^q, y^q, w^q) \in Q \text{ DO}$$

$$\alpha = w^p - w^q$$

$$\text{FOR } \gamma \in (\gamma_1, \gamma_L) \text{ DO}$$

$$\theta = \alpha + \gamma$$

$$\text{IF } \theta \in (\theta_1, \theta_L) \text{ THEN}$$

$$\begin{pmatrix} t_x \\ t_y \end{pmatrix} = \begin{pmatrix} x^q \\ y^q \end{pmatrix} - \begin{pmatrix} \cos\theta & \sin\theta \\ -\sin\theta & \cos\theta \end{pmatrix} \begin{pmatrix} x^p \\ y^p \end{pmatrix}$$

$$\text{IF } t_x \in (t_{x1}, t_{xM}) \wedge t_y \in (t_{y1}, t_{yN}) \text{ THEN}$$

$$dw = \theta / iw$$

$$dx = t_x / ix$$

$$dy = t_y / iy$$

Add evidence for $(dw, dx, dy) \Rightarrow A(dw, dx, dy) = A(dw, dx, dy) + 1$

IF $A(dw, dx, dy) >$ Threshold THEN

In Kandidatenliste Speichern

END PROCEDURE

$$Fig. \ 26$$

Fig. 27

●—— Eingabeminuzie     O—— Referenzminuzie

Fig. 28

—— Eingabeminuzie     ⊝—— Referenzminuzie

Fig. 29

PROCEDURE Varianzanalyse

FOR $w = \theta - 5$ TO $w = \theta + 5$ DO

    FOR $i = 0$ TO $m$ DO

        Berechne $t_x$ und $t_y$ für das $i$'te Paar

        $sumQuadrat(t_x) = sumQuadrat(t_x) + t_x^2$

        $sumQuadrat(t_y) = sumQuadrat(t_y) + t_y^2$

        $sum(t_x) = sum(t_x) + t_x$

        $sum(t_y) = sum(t_y) + t_y$

    END FOR

    Berechne die Varianz nach der Formel (5)

END FOR

$w$ mit min $[var(t_x) + var(t_y)]$: korrigierter Rotationswinkel $\theta = w$

$$t_x = \frac{sum(t_x)}{m} \quad und \quad t_y = \frac{sum(t_y)}{m}$$

END PROCEDURE

Fig. 30

```
┌─────────────────────┐
│   Erzeugung des     │
│   Richtungsbildes   │
└─────────────────────┘
           │
           ▼
┌─────────────────────┐
│  Rohminuzien und    │
│  Schwarze Lücke im  │
│   Richtungsbild     │
└─────────────────────┘
           │
           ▼
┌─────────────────────┐
│    Poincare Index   │
└─────────────────────┘
```

| Bogen | Linke Schlinge | Rechte Schlinge | Wirbel |

Fig. 31

(a) Gewöhnlicher Punkt mit 0°

(b) Delta-Punkt mit -180°

(c) Kern-Punkt mit 180°

(d) Doppelkern-Punkt mit 360°

Fig. 32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2582831 A1

**In der Beschreibung aufgeführte Nicht-Patentliteratur**

- *Fingerprint Image Analysis for Automatic Identification Machine Vision and Applications,* 1993, (2-3), 124-139
- **MARIO et al.** *Direct Gray-Scale Minutae Detection in Fingerprints, Pattern Analysis and Machine Intelligence,* Januar 1997, vol. 1, 27-40

- **RATHA et al.** *A Real-Time Matching System For Large Fingerprint Databases, Pattern Analysis and Machine Intelligence,* August 1996, vol. 8, 799-813